(19)

Europäisches Patentamt

European Patent Office

Office européen des brevets

(11) **EP 3 496 347 A1**

(12) **EUROPEAN PATENT APPLICATION**
published in accordance with Art. 153(4) EPC

(43) Date of publication:
**12.06.2019 Bulletin 2019/24**

(51) Int Cl.:
**H04L 12/911** (2013.01)     **H04L 12/927** (2013.01)
**H04L 12/917** (2013.01)

(21) Application number: **17809729.1**

(22) Date of filing: **07.06.2017**

(86) International application number:
**PCT/CN2017/087423**

(87) International publication number:
**WO 2017/211290 (14.12.2017 Gazette 2017/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.06.2016  CN 201610406904**

(71) Applicant: **ZTE Corporation**
**Shenzhen, Guangdong 518057 (CN)**

(72) Inventors:
• **LU, Liuming**
**Shenzhen**
**Guangdong 518057 (CN)**

• **YUAN, Liquan**
**Shenzhen**
**Guangdong 518057 (CN)**
• **ZHANG, Weiliang**
**Shenzhen**
**Guangdong 518057 (CN)**
• **JIN, Jun**
**Shenzhen**
**Guangdong 518057 (CN)**

(74) Representative: **Aipex B.V.**
**P.O. Box 30223**
**3001 DE Rotterdam (NL)**

(54) **DYNAMIC BANDWIDTH ALLOCATION METHOD, DEVICE, AND SYSTEM**

(57)    Provided are a dynamic bandwidth allocation method, device and system. The method comprises: acquiring traffic flow information of each QoS queue in a downstream buffer of a DPU and a upstream buffer of a CPE, determining a downstream/upstream rate ratio Mds/Mus according to the traffic flow information; and transmitting by the DPU the TDD frame configuration information corresponding to the adjusted downstream/upstream rate ratio Mds/Mus to the CPE. In this way, a problem that the traffic QoS is reduced because G.fast does not support the dynamic bandwidth allocation is solved, thus improving the traffic QoS.

EP 3 496 347 A1

Acquire traffic flow information of each QoS queue in a downstream buffer of a DPU and an upstream buffer of a CPE — S402

Determine a downstream/upstream rate ratio Mds/Mus according to the traffic flow information — S404

Transmit, by the DPU, TDD frame configuration information corresponding to the adjusted downstream/upstream rate ratio Mds/Mus to the CPE — S406

FIG. 4

**Description**

**TECHNICAL FIELD**

The present invention relates to, but is not limited to, communications field, and in particular, relates to a dynamic bandwidth allocation method, device and system.

**BACKGROUND**

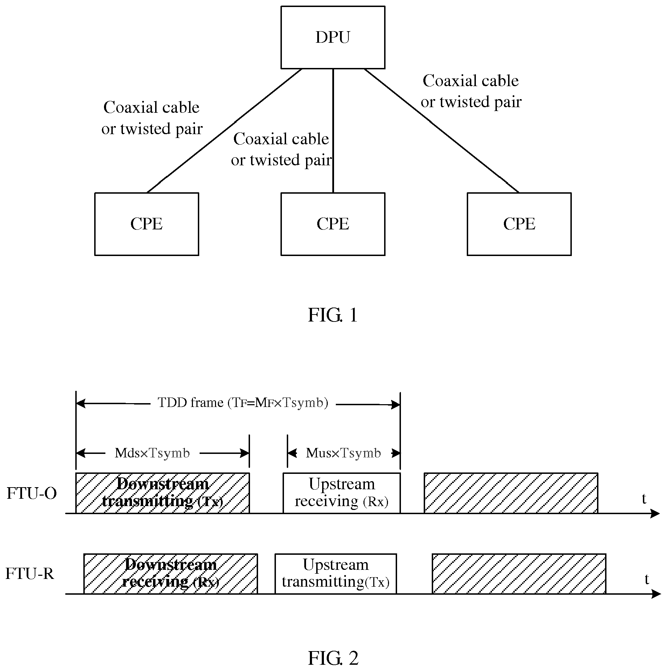

The copper cable access system includes a fast access to subscriber terminals (FAST) system and a very high speed digital subscriber line (VDSL2) system. Its network framework includes a G.fast/xDSL distribution point unit (DPU) and a G.fast/xDSL customer premise equipment (CPE). The G.fast/xDSL DPU is provided with multiple interfaces for connection with multiple CPEs separately, that is, one fast transceiver unit at the optical network unit (FTU-O) is connected to one fast transceiver unit at the remote site (FTU-R) (a P2P architecture), as shown in FIG. 1. The connection medium between the interface of the G.fast/xDSL DPU and the interface of the G.fast/xDSL CPE may be a copper cable such as twisted pairs and coaxial cables. In the case where the connection medium is the coaxial cables, no crosstalk exists among the coaxial cables. G.fast adopts a time division duplexing (TDD) working mode, each TDD frame includes Mds downstream symbols and Mus upstream symbols, as shown in FIG. 2. Tsymb denotes a symbol period, TF denotes a TDD frame period and MF = Mds + Mus + 1. At present, in the initialization phase, a downstream and upstream rate ratio (i.e., Mds/Mus) is pre-configured. In the showtime phase, Mds/Mus cannot be dynamically allocated. Therefore, G.fast supports neither dynamic band width allocation (DBA) nor dynamic time assignment (DTA).

**SUMMARY**

A summary of the subject matter is described hereinafter in detail. This summary is not intended to limit the scope of the claims.
Embodiments of the present invention provide a dynamic bandwidth allocation method, device and system to solve a problem that the traffic QoS is reduced because G.fast does not support the dynamic bandwidth allocation.
An embodiment of the present invention provides a dynamic bandwidth allocation method, including: acquiring traffic flow information of each Quality of Service (QoS) queue in a downstream buffer of a distribution point unit (DPU) and an upstream buffer of a customer premise equipment (CPE); and determining, according to the traffic flow information, a downstream/upstream rate ratio Mds/Mus; and transmitting, by the DPU, time division duplexing (TDD) frame configuration information corresponding to an adjusted downstream/upstream Mds/Mus to the CPE.
In an exemplary embodiment, the traffic flow information includes at least one of: priority information of each QoS queue in the downstream buffer of the DPU and the upstream buffer of the CPE, a buffer data size, rate information of data entering each QoS queue in the downstream buffer of the DPU and the upstream buffer of the CPE, total rate information of data entering the downstream buffer of the DPU and total rate information of data entering the upstream buffer of the CPE. The traffic flow information of each QoS queue in the upstream buffer of the CPE is reported by the CPE.
In an exemplary embodiment, the acquiring the traffic flow information of each QoS queue in the downstream buffer of the DPU and the upstream buffer of the CPE includes: acquiring the priority information of each QoS queue in the downstream buffer of the DPU and the upstream buffer of the CPE, the buffer data size, the rate information of data entering each QoS queue in the downstream buffer of the DPU and the upstream buffer of the CPE, the total rate information of data entering the downstream buffer of the DPU and the total rate information of data entering the upstream buffer of the CPE. The priority information includes at least one of: a priority type corresponding to each QoS queue, and bandwidth size and weight information allocated according thereto.
In an exemplary embodiment, the priority type includes at least one of: a fixed bandwidth, an assured bandwidth, a not-assured bandwidth and a best-effort bandwidth.
In an exemplary embodiment, the acquiring the traffic flow information of each QoS queue in the downstream buffer of the DPU and the upstream buffer of the CPE includes: acquiring route attainable net rate information of each QoS queue in the downstream buffer of the DPU and the upstream buffer of the CPE, the buffer data size of each QoS queue in the upstream buffer, the total rate information of data entering the upstream buffer and the total rate information of data entering the downstream buffer, and the rate information of data entering each QoS queue of the upstream buffer.
In an exemplary embodiment, the acquiring the route attainable net rate information includes: obtaining the route attainable net rate information by acquiring TDD frame configuration information and according to a current route situation. The TDD frame configuration information includes: a number of downstream symbols Mds and a number of upstream symbols Mus. The route attainable net rate information includes a maximum downstream attainable net rate ATTNDRdsmax and a maximum upstream attainable net rate ATTNDRusmax.
In an exemplary embodiment, the determining the downstream/upstream rate ratio

Mds/Mus according to the traffic flow information includes: determining whether the traffic flow information matches at least one rule in a preset triggering rule list; in determining that the traffic flow information matches at least one rule in the preset triggering rule list, triggering to adjust the downstream/upstream rate ratio Mds/Mus of a communication link.

In an exemplary embodiment, the determining whether the traffic flow information matches at least one rule in the preset triggering rule list includes: determining whether the total rate information of data entering the upstream buffer and the total rate information of data entering the downstream buffer match at least one rule in the preset triggering rule list.

In an exemplary embodiment, the determining whether the traffic flow information matches at least one rule in the preset triggering rule list includes: determining whether at least one of the rate information of data entering each QoS queue in the downstream buffer of the DPU and the upstream buffer of the CPE and the buffer data size matches at least one rule in the preset triggering rule list.

In an exemplary embodiment, the determining whether the traffic flow information matches at least one rule in the preset triggering rule list includes: determining whether at least one of the priority information, the rate information data entering each QoS queue in the downstream buffer of the DPU and the upstream buffer of the CPE, the buffer data size, and the route attainable net rate information matches at least one rule in the preset triggering rule list.

In an exemplary embodiment, determining whether the priority information matches at least one rule in the preset triggering rule list includes at least one of:

determining whether a downstream fixed bandwidth FBds and an upstream fixed bandwidth FBus of the fixed bandwidth match at least one rule in the preset triggering rule list;
determining whether a downstream assured bandwidth ABds and an upstream assured bandwidth ABus of the assured bandwidth match at least one rule in the preset triggering rule list;
determining whether at least one of a downstream not-assured bandwidth NABds of the not-assured bandwidth, a downstream not-assured bandwidth weight Wnads corresponding to the NABds, an upstream not-assured bandwidth NABus and an upstream not-assured bandwidth weight Wnaus corresponding to the NABus matches at least one rule in the preset triggering rule list; and
determining whether at least one of a downstream best-effort bandwidth BBds of the best-effort bandwidth, a downstream best-effort bandwidth weight Wbeds corresponding to the BBds, an upstream best-effort bandwidth BBus and an upstream best-effort bandwidth weight Wbeus corresponding to the BBus matches at least one rule in the preset triggering rule list.

In an exemplary embodiment, triggering to adjust the downstream/upstream rate ratio Mds/Mus of the communication link may include: calculating a required maximum downstream payload rate ATTNDRdsmaxnew and a required maximum upstream payload rate ATTNDRusmaxnew corresponding to each priority information of each QoS queue in the downstream buffer of the DPU and the upstream buffer of the CPE separately; calculating, according to a preset downstream fixed bandwidth MCRds and a preset upstream fixed bandwidth MCRus, with the required maximum downstream payload rate ATTNDRdsmaxnew and the required maximum upstream payload rate ATTNDRusmaxnew, and obtaining the adjusted downstream/upstream Mds/Mus.

In an exemplary embodiment, in determining that the priority information is the fixed bandwidth, the method may further include: determining whether a sum of the upstream fixed bandwidth FBus and the downstream fixed bandwidth FBds is greater than an allocable upstream and downstream payload total bandwidth ATTNDRmaxestimate; in determining that the sum is not greater than the ATTNDRmaxestimate, calculating separately the currently allocated maximum upstream payload rate ATTNDRusmaxnew corresponding to the upstream fixed bandwidth FBus and the currently allocated maximum downstream payload rate ATTNDRdsmaxnew corresponding to the downstream fixed bandwidth FBds; and determining whether a result ATTNDRremain of subtracting the currently allocated maximum upstream payload rate ATTNDRusmaxnew corresponding to the FBus and the currently allocated maximum downstream payload rate ATTNDRdsmaxnew corresponding to the FBds from the ATTNDRmaxestimate is greater than a negligible bandwidth size deltaBBmin that does not require being allocated; in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream Mds/Mus.

In an exemplary embodiment, in determining that the priority information is the the assured bandwidth, the method may further includes: calculating separately the currently allocated maximum upstream payload rate ATTNDRusmaxnew corresponding to the upstream assured bandwidth ABus and the currently allocated maximum downstream payload rate ATTNDRdsmaxnew corresponding to the downstream assured bandwidth ABds; determining whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth size deltaBBmin that does not require being allocated; and in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream Mds/Mus.

In an exemplary embodiment, the priority information is the not-assured bandwidth, the method may further include: according to the upstream not-assured bandwidth weight Wnaus and the downstream not-assured bandwidth weight Wnads, calculating separately the currently allocated maximum upstream payload rate ATTNDRusmaxnew corresponding to the upstream not-assured bandwidth NABus and the currently allocated maximum downstream payload rate ATTNDRdsmaxnew corresponding to the downstream not-assured bandwidth NABds; determining whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth deltaBBmin that does not require being allocated; and in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

In an exemplary embodiment, in determining that the priority information is the priority information is the best-effort bandwidth, the method further comprises: calculating separately the currently allocated maximum upstream payload rate ATTNDRusmaxnew corresponding to the upstream best-effort bandwidth BBus and the currently allocated maximum downstream payload rate ATTNDRdsmaxnew corresponding to the downstream best-effort bandwidth BBds; determining whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth deltaBBmin that does not require being allocated; and in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

In an exemplary embodiment, before determining whether the traffic flow information matches at least one rule in the preset triggering rule list, the method may further include: configuring at least one rule in the preset triggering rule list according to the priority information and the route attainable net rate information.

In an exemplary embodiment, the transmitting, by the DPU, the TDD frame configuration information corresponding to the adjusted downstream/upstream rate ratio Mds/Mus to the CPE includes: negotiating the TDD frame configuration information corresponding to the adjusted downstream/upstream rate ratio Mds/Mus with the CPE and performing data transmission with the CPE according to the negotiated TDD frame configuration information after adjustment.

In an exemplary embodiment, the negotiating the TDD frame configuration information corresponding to the adjusted downstream/upstream rate ratio Mds/Mus with the CPE and performing the data transmission with the CPE according to the negotiated TDD frame configuration information after adjustment includes: transmitting the TDD frame configuration information corresponding to the adjusted downstream/upstream rate ratio Mds/Mus to the CPE; receiving the negotiated TDD frame configuration information corresponding to the adjusted downstream/upstream rate ratio Mds/Mus returned by the CPE; and configuring a TDD frame according to the negotiated TDD frame configuration information, and performing data transmission and reception with the CPE by using the TDD frame configuration information.

An embodiment of the present application provides a dynamic bandwidth allocation device, including: an acquisition module, which is configured to acquire traffic flow information of each QoS queue in a downstream buffer of a DPU and an upstream buffer of a CPE; an adjustment module is configured to determine, according to the traffic flow information, a downstream/upstream rate ratio Mds/Mus; and a transmitting module is configured to transmit TDD frame configuration information corresponding to the adjusted downstream/upstream rate ratio Mds/Mus to the CPE.

In an exemplary embodiment, the traffic flow information may include at least one of:priority information of each QoS queue in the downstream buffer of the DPU and the upstream buffer of the CPE, a buffer data size, rate information of data entering each QoS queue in the downstream buffer of the DPU and the upstream buffer of the CPE, total rate information of data entering the downstream buffer of the DPU, and total rate information of data entering the upstream buffer of the CPE; where the traffic flow information of each QoS queue in the upstream buffer of the CPE is reported by the CPE.

In an exemplary embodiment, the acquisition module may include: a first acquisition unit, which is configured to acquire, the priority information of each QoS queue in the downstream buffer of the DPU and the upstream buffer of the CPE, the buffer data size, the rate information of data entering each QoS queue in the downstream buffer of the DPU and the upstream buffer of the CPE, the total rate information of data entering the downstream buffer of the DPU, and the total rate information of data entering the upstream buffer of the CPE; where the priority information includes at least one of: a priority type corresponding to each QoS queue, and bandwidth size and weight information allocated according thereto.

In an exemplary embodiment, the priority type includes at least one of: a fixed bandwidth, an assured bandwidth, a not-assured bandwidth and a best-effort bandwidth.

In an exemplary embodiment, the acquisition module may include: a second acquisition unit, configured to acquire route attainable net rate information of each QoS queue in the downstream buffer of the DPU and the upstream buffer of the CPE, the buffer data size of each QoS queue in the upstream buffer, the total rate information of data entering the upstream buffer, and the total rate information of data entering the downstream buffer, and the rate information of data entering each QoS queue in the upstream buffer.

In an exemplary embodiment, the second acquisition unit may include: a first acquisition subunit, which is configured to obtain the route attainable net rate information by acquiring TDD frame configuration information and according to a current route situation, wherein the TDD frame configuration information comprises: a number of downstream symbols Mds and a number of upstream symbols Mus; the route attainable net rate information comprises a maximum downstream attainable net rate ATTNDRdsmax and a maximum upstream attainable net rate ATTNDRusmax.

In an exemplary embodiment, the adjustment module may include a determination unit, configured to determine whether the traffic flow information matches at least one rule in a preset triggering rule list; and an adjustment unit, configured to trigger to adjust the downstream/upstream rate ratio Mds/Mus of a communication link in determining that the traffic flow information matches at least one rule in the preset triggering rule list.

In an exemplary embodiment, the determination unit may include: a first determination subunit, which is configured to determine whether the total rate information of data entering the upstream buffer and the total rate information of data entering the downstream buffer match at least one rule in the preset triggering rule list.

In an exemplary embodiment, the determination unit may include: a second determination subunit, which is configured to determine whether at least one of the rate information of data entering each QoS queue in the downstream buffer of the DPU and the upstream buffer of the CPE and the buffer data size matches at least one rule in the preset triggering rule list.

In an exemplary embodiment, the determination unit may include: a third determination subunit, which is configured to determine whether at least one of the priority information, the rate information of data entering each QoS queue in the downstream buffer of the DPU and the upstream buffer of the CPE, the buffer data size and the route attainable net rate information matches at least one rule in the preset triggering rule list.

In an exemplary embodiment, the third determination subunit is further configured to determine whether the priority information matches at least one rule in the preset triggering rule list in at least one of the following manners:

determining whether a downstream fixed bandwidth FBds and an upstream fixed bandwidth FBus of the fixed bandwidth match at least one rule in the preset triggering rule list;
determining whether a downstream assured bandwidth ABds and an upstream assured bandwidth ABus of the assured bandwidth match at least one rule in the preset triggering rule list;
determining whether at least one of the a downstream not-assured bandwidth NABds of the not-assured bandwidth, a downstream not-assured bandwidth weight Wnads corresponding to the NABds, an upstream not-assured bandwidth NABus and an upstream not-assured bandwidth weight Wnaus corresponding to the NABus matches at least one rule in the preset triggering rule list; and
determining whether at least one of a downstream best-effort bandwidth BBds of the best-effort bandwidth, a downstream best-effort bandwidth weight Wbeds corresponding to the BBds, an upstream best-effort bandwidth BBus and an upstream best-effort bandwidth weight Wbeus corresponding to the BBus matches at least one rule in the preset triggering rule list.

In an exemplary embodiment, the adjustment unit may include a first calculation subunit, configured to calculate a required maximum downstream payload rate ATTNDRdsmaxnew and a required maximum upstream payload rate ATTNDRusmaxnew corresponding to each priority information of each QoS queue in the downstream buffer of the DPU and the upstream buffer of the CPE separately; and a second calculation subunit, configured to calculate, according to a preset downstream fixed bandwidth MCRds and a preset upstream fixed bandwidth MCRus, with the required maximum downstream payload rate ATTNDRdsmaxnew and the required maximum upstream payload rate ATTNDRusmaxnew, and obtain the adjusted downstream/upstream rate ratio Mds/Mus.

In an exemplary embodiment, the adjustment unit may include the first determination subunit, configured to determine, in determining that the priority information is the fixed bandwidth, whether a sum of the upstream fixed bandwidth FBus and the downstream fixed bandwidth FBds is greater than an allocable upstream and downstream payload total bandwidth ATTNDRmaxestimate; the second determination subunit, configured to calculate, in determining that the sum is not greater than the ATTNDRmaxestimate, the currently allocated maximum upstream payload rate ATTNDRusmaxnew corresponding to the upstream fixed bandwidth FBus and the currently allocated maximum downstream payload rate ATTNDRdsmaxnew corresponding to the downstream fixed bandwidth FBds; and determine whether a result ATTNDRremain of subtracting the currently allocated maximum upstream payload rate ATTNDRusmaxnew corresponding to the FBus and the currently allocated maximum downstream payload rate ATTNDRdsmaxnew corresponding to the FBds from the ATTNDRmaxestimate is greater than a negligible bandwidth size deltaBBmin that does not require being allocated; and a third calculation subunit, configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

In an exemplary embodiment, the adjustment unit may include a fourth calculation subunit, configured to calculate, in determining that the priority information is the assured bandwidth, the currently allocated maximum upstream payload rate ATTNDRusmaxnew corresponding to the upstream assured bandwidth ABus and the currently allocated maximum downstream payload rate ATTNDRdsmaxnew corresponding to the downstream assured bandwidth ABds; the third determination subunit, configured to determine whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth size deltaBBmin that does not require being allocated; and a fifth calculation subunit, configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

In an exemplary embodiment, the adjustment unit may include a sixth calculation subunit, configured to calculate, in determining that the priority information is the not-assured bandwidth, according to the upstream not-assured bandwidth weight Wnaus and the downstream not-assured bandwidth weight Wnads, the currently allocated maximum upstream payload rate ATTNDRusmaxnew corresponding to the upstream not-assured bandwidth NABus and the currently allocated maximum downstream payload rate ATTNDRdsmaxnew corresponding to the downstream not-assured bandwidth NABds; a fourth determination subunit, configured to determine whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth size deltaBBmin that does not require being allocated; and a seventh calculation subunit, which is configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

In an exemplary embodiment, the adjustment unit may include an eighth calculation subunit, configured to calculate, in determining that the priority information is the best-effort bandwidth, the currently allocated maximum upstream payload rate ATTNDRusmaxnew corresponding to the upstream best-effort bandwidth BBus and the currently allocated maximum downstream payload rate ATTNDRdsmaxnew corresponding to the downstream best-effort bandwidth BBds; a fifth determination subunit, configured to determine whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth size deltaBBmin that does not require being allocated; and a ninth calculation subunit, configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

In an exemplary embodiment, the above device may further include a rule configuration module, configured to configure, before determining whether the traffic flow information matches at least one rule in the preset triggering rule list, at least one rule in the preset triggering rule list according to the priority information and the route attainable net rate information.

In an exemplary embodiment, the transmitting module is configured to negotiate the TDD frame configuration information corresponding to the adjusted downstream/upstream rate ratio Mds/Mus with the CPE and perform data transmission with the CPE according to the negotiated TDD frame configuration information after adjustment.

In an exemplary embodiment, the transmitting module may include a transmitting unit, configured to transmit the TDD frame configuration information corresponding to the adjusted downstream/upstream rate ratio Mds/Mus to the CPE; a receiving unit, configured to receive the negotiated TDD frame configuration information corresponding to the adjusted downstream/upstream rate ratio Mds/Mus returned by the CPE; and a configuration unit, configured to configure a TDD frame according to the negotiated TDD frame configuration information, and perform data transmission and reception with the CPE by using the TDD frame configuration information.

Another embodiment of the present invention provides a dynamic bandwidth allocation system, which includes a DPU and a CPE. The DPU and the CPE are communicatively connected to each other, and the DPU includes the above dynamic bandwidth allocation device.

In addition, an embodiment of the present invention further provides a DPU, which includes a memory, a processor and dynamic bandwidth allocation programs stored in the memory and executed by the processor. The dynamic bandwidth allocation programs implement the steps of the above dynamic bandwidth allocation method when executed by the processor.

In addition, an embodiment of the present invention further provides a computer-readable medium, storing dynamic bandwidth allocation programs which, when executed by a processor, implement the steps of the above dynamic bandwidth allocation method.

Through this application, traffic flow information of each QoS queue in the downstream buffer of the DPU and a upstream buffer of the CPE is acquired, the downstream/upstream rate ratio Mds/Mus is determined according to the traffic flow information, the DPU transmits to the CPE TDD frame configuration information corresponding to the adjusted downstream/upstream rate ratio Mds/Mus. Therefore, the problem that the traffic QoS is reduced because G.fast does not support the dynamic bandwidth allocation may be solved, and the traffic QoS is improved.

Other aspects can be understood after the drawings and detailed description are read and understood.

## BRIEF DESCRIPTION OF DRAWINGS

The drawings described herein are used to provide a further understanding of the present invention and form a part of the present invention. The exemplary embodiments and descriptions thereof in the present invention are used to explain the present invention and not to limit the present invention in any improper way. In the drawings:

FIG. 1 is a schematic diagram of an architecture of a G.fast/xDSL system;
FIG. 2 is a schematic diagram of a TDD frame;
FIG. 3 is a block diagram of a hardware structure of a distribution point unit executing a dynamic bandwidth allocation method according to an embodiment of the present invention;
FIG. 4 is a flowchart of a dynamic bandwidth allocation method according to an embodiment of the present invention;
FIG. 5 is a schematic diagram of a FTU-O reference model I based on traffic monitor and DTA;
FIG. 6 is a schematic diagram of a FTU-O reference model II based on traffic monitor and DTA;
FIG. 7 is a schematic diagram of a priority mapping of queues according to an embodiment of the present invention;
FIG. 8 is a schematic diagram of queues of a downstream buffer;
FIG. 9 is a schematic diagram of queues of an upstream buffer;
FIG. 10 is a structural diagram of a DTA control module; and
FIG. 11 is a block diagram of a dynamic bandwidth allocation device according to an embodiment of the present invention.

## DETAILED DESCRIPTION

The present invention will be described hereinafter in detail through embodiments with reference to the drawings. It is to be noted that if not in collision, the embodiments and features therein in the present invention may be combined with each other.

It is to be noted that the terms "first", "second" and the like in the description, claims and drawings of the present application are used to distinguish between similar objects and are not necessarily used to describe a particular order or sequence.

Technical terms involved in the embodiments of the present application are:

very high speed digital subscriber line 2 (VDSL2);
distribution point unit (DPU);
customer premise equipment (CPE);
time division duplexing (TDD);
dynamic bandwidth allocation (DBA);
dynamic time assignment (DTA).

Embodiment one

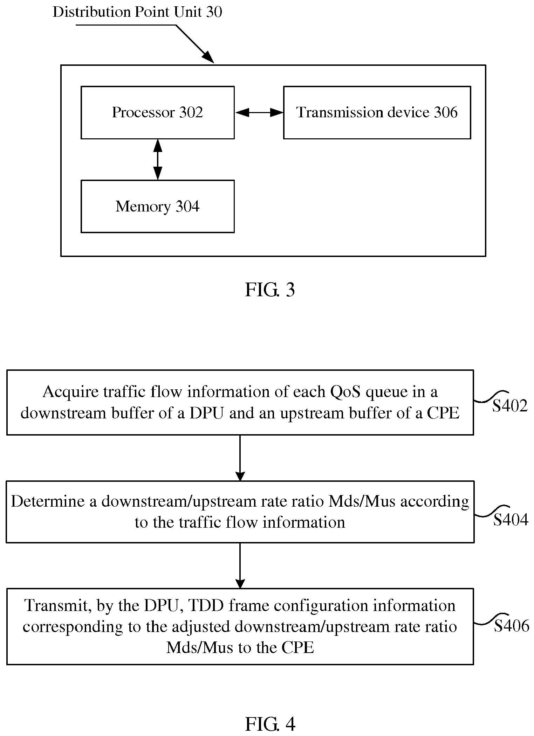

The method embodiment provided by the embodiment one of the present invention may be executed on a mobile terminal, a computer terminal or other similar computing apparatuses. In the following example, the method is executed on a DPU. FIG. 3 is a block diagram of a hardware structure of the DPU executing a dynamic bandwidth allocation method according to an embodiment of the present invention. As shown in FIG. 3, a DPU 30 may include one or more (only one is shown in FIG. 1) processors 302 (the processor 302 may include, but is not limited to, a microprocessor such as an MCU, a programmable logic device such as an FPGA or other processing devices), a memory 304 used for storing data, and a transmission device 306 used for implementing a communication function. It should be understood by those skilled in the art that the structure shown in FIG. 3 is merely illustrative and not intended to limit the structure of the electronic apparatus described above. For example, the DPU 30 may further include more or less components than the components shown in FIG. 3, or has a configuration different from the configuration shown in FIG. 3.

The memory 304 may be used for storing software programs and modules of application software, such as program instructions/modules corresponding to the dynamic bandwidth allocation method in the embodiments of the present invention. The processor 202 executes the software programs and modules stored in the memory 304 so as to perform various function applications and data processing, that is, to implement the method described above. The memory 304 may include a high-speed random access memory, and may further include a nonvolatile memory, such as one or more magnetic storage apparatuses, flash memories or other nonvolatile solid-state memories. In some examples, the memory 304 may further include memories that are remotely disposed with respect to the processors 302. These remote memories may be connected to the DPU 30 via a network. Examples of the network described above include, but are not limited to, the Internet, an intranet, a local area network, a mobile communication network and a combination thereof.

The transmission device 306 is configured to receive and transmit data via a network. Examples of such a network may include a wireless network provided by a communication provider of the DPU 30. In one example, the transmission device 306 includes a network interface controller (NIC), which may be connected to other network devices via a base station and thus is capable of communicating with the Internet. In one example, the transmission device 306 may be a radio frequency (RF) module, which is used for communicating with the Internet in a wireless way.

This embodiment provides a method executed on the DPU described above. FIG. 4 is a flowchart of a dynamic bandwidth allocation method according to an embodiment of the present invention. As shown in FIG. 4, on the DPU side, the method includes steps described below.

In step S402, traffic flow information of each Quality of Service (QoS) queue in a downstream buffer of a distribution point unit (DPU) and an upstream buffer of a customer premise equipment (CPE) is acquired.

In step S404, according to the traffic flow information, a downstream/upstream rate ratio Mds/Mus is determined.

In step S406, the DPU transmits time division duplexing (TDD) frame configuration information corresponding to the adjusted downstream/upstream rate ratio Mds/Mus to the CPE.

Mds represents the number of downstream symbols of each TDD frame, Mus represents the number of upstream symbols of each TDD frame and the downstream/upstream rate ratio is Mds/Mus.

In view of the above, by means of the steps S402 to S406, on the DPU side, the dynamic bandwidth allocation method provided by the embodiment of the present invention may implement the DTA method in the DSL/Gfast system and dynamically adjust the downstream/upstream rate ratio in real time based on the downstream/upstream traffic situation, and the traffic type and priority corresponding to each traffic flow, and effectively meet the access requirements of various traffic types of the users and ensure the QoS requirements of the traffic within a given user bandwidth range.

The DPU receives at least one of a buffer size of each QoS queue in the upstream buffer reported by the CPE and a rate of data entering each queue. The DPU receives and monitors in real time each QoS queue information in the buffer reported by the CPE. Meanwhile, in combination with at least one of the buffer size of each QoS queue in the downstream buffer of the DPU and the rate of data entering each queue, based on priority and traffic type of each QoS queue in the downstream buffer of the DPU and the upstream buffer of the CPE, and according to a triggering rule, the DPU determines whether to adjust the current Mds/Mus. In response to determining that the current Mds/Mus needs to be adjusted, the DPU calculates the downstream/upstream rate ratio Mds/Mus satisfying current upstream/downstream traffic and access traffic requirements. The DPU transmits TDD frame configuration information corresponding to the newly adjusted Mds/Mus to the CPE, and G.fast operates according to the newly configured TDD frame. The analysis process based on the triggering rule is as follows. In an order from high priority to low priority, the allocation of the fixed bandwidth, the allocation of the assured bandwidth, the allocation of the not-assured bandwidth and the allocation of the best-effort bandwidth are sequentially analyzed, and whether to adjust Mds/Mus is determined. The calculation of Mds/Mus is also executed, in the order from high priority to low priority, for the allocation of the fixed bandwidth, the allocation of the assured bandwidth, the allocation of the not-assured bandwidth and the allocation of the best-effort bandwidth to implement Mds/Mus allocation based on data flow, traffic flow type and QoS priority.

The dynamic bandwidth allocation method provided by the embodiment of the present invention implements the DTA method based on the downstream/upstream flow, the traffic type and the priority. To reduce overhead brought by adjusting Mds/Mus, trigger mechanism and rule is adopted, and Mds/Mus adjustment is started only when the triggering rule is met.

According to the dynamic bandwidth allocation method provided by an embodiment of the present invention, traffic flow information of each QoS queue in the downstream buffer of the DPU and the upstream buffer of the CPE is acquired, the downstream/upstream rate ratio Mds/Mus is determined according to the traffic flow information; and the DPU transmits the TDD frame configuration information corresponding to the adjusted downstream/upstream rate ratio Mds/Mus to the CPE. Therefore, a problem that the traffic QoS is reduced because G.fast does not support the dynamic bandwidth allocation may be solved, and the traffic QoS is improved.

In an exemplary embodiment, the traffic flow information may include at least one of: priority information of each QoS queue in the downstream buffer of the DPU and the upstream buffer of the CPE, the buffer data size, rate information of data entering each QoS queue in the downstream buffer of the DPU and the upstream buffer of the CPE, total rate information of data entering the downstream buffer of the DPU and total rate information of data entering the upstream buffer of the CPE; where the traffic flow information of each QoS queue in the upstream buffer of the CPE is reported by the CPE.

In the above exemplary embodiment, in step S402, acquiring traffic flow information of each QoS queue in the downstream buffer of the DPU and the upstream buffer of the CPE may include the following step.

In step 10, the priority information of each QoS queue in the downstream buffer of the DPU and the upstream buffer of the CPE, the buffer data size, the rate information of data entering each QoS queue in the downstream buffer of the DPU and the upstream buffer of the CPE, the total rate information of data entering the downstream buffer of the DPU, and the total rate information of data entering the upstream buffer of the CPE are acquired. The priority information includes at least one of: a priority type corresponding to each QoS queue, and bandwidth size and weight information allocated correspondingly.

In an exemplary embodiment, the priority type includes at least one of: a fixed bandwidth, an assured bandwidth, a not-assured bandwidth and a best-effort bandwidth.

In the above exemplary embodiment, in step S402, acquiring the traffic flow information of each QoS queue in the downstream buffer of the DPU and the upstream buffer of the CPE may include the following step.

In step 10', route attainable net rate information of each QoS queue in the downstream buffer of the DPU and the upstream buffer of the CPE, the buffer data size of each QoS queue in the upstream buffer, the total rate information of data entering the upstream buffer and the total rate information of data entering the downstream buffer, and the rate information of data entering each QoS queue the upstream buffer are acquired.

In the above exemplary embodiment, in step 10', the route attainable net rate information may be acquired as follows.

The route attainable net rate information is obtained by acquiring TDD frame configuration information and according to a current route situation. The TDD frame configuration information includes: the number of downstream symbols Mds and the number of upstream symbols Mus. The route attainable net rate information includes a maximum downstream attainable net rate ATTNDRdsmax and a maximum upstream attainable net rate ATTNDRusmax.

In the above exemplary embodiment, in step S404, determining the downstream/upstream rate ratio Mds/Mus according to the traffic flow information may include the steps described below.

In step 11, whether the traffic flow information matches at least one rule in a preset triggering rule list is determined.

In step 12, in determining that the traffic flow information matches at least one rule in the preset triggering rule list, the adjustment of the downstream/upstream rate ratio Mds/Mus of the communication link is triggered.

In an exemplary embodiment, in step 11 of the step S404, determining whether the traffic flow information matches at least one rule in the preset triggering rule list may include the step described below.

In step a, whether the total rate information of data entering the upstream buffer and the total rate information of data entering the downstream buffer match at least one rule in the preset triggering rule list is determined.

In an exemplary embodiment, in step 11 of the step S404, determining whether the traffic flow information matches at least one rule in the preset triggering rule list may include the step described below.

In step a', whether at least one of the rate information of data entering each QoS queue in the downstream buffer of the DPU and the upstream buffer of the CPE and the buffer data size matches at least one rule in the preset triggering rule list is determined.

In an exemplary embodiment, in step 11 of the step S404, determining whether the traffic flow information matches at least one rule in the preset triggering rule list may include the step described below.

In step a", whether at least one of the priority information, the rate information of data entering each QoS queue in the downstream buffer of the DPU and the upstream buffer of the CPE, the buffer data size and the route attainable net rate information matches at least one rule in the preset triggering rule list is determined.

In an exemplary embodiment, determining whether the priority information matches at least one rule in the preset triggering rule list includes at least one of:

determining whether a downstream fixed bandwidth FBds and an upstream fixed bandwidth FBus of the fixed bandwidth matches at least one rule in the preset triggering rule list;

determining whether a downstream assured bandwidth ABds and an upstream assured bandwidth ABus of the assured bandwidth matches at least one rule in the preset triggering rule list;

determining whether at least one of the a downstream not-assured bandwidth NABds of the not-assured bandwidth, a downstream not-assured bandwidth weight Wnads corresponding to the NABds, an upstream not-assured bandwidth NABus and an upstream not-assured bandwidth weight Wnaus corresponding to the NABus matches at least one rule in the preset triggering rule list; and

determining whether at least one of a downstream best-effort bandwidth BBds of the best-effort bandwidth, a downstream best-effort bandwidth weight Wbeds corresponding to the BBds, an upstream best-effort bandwidth BBus and an upstream best-effort bandwidth weight Wbeus corresponding to the BBus matches at least one rule in the preset triggering rule list.

From the above, the dynamic bandwidth allocation method provided by the embodiment of the present application may determine according to the priority from high to low, where the priority of the fixed bandwidth is the highest, the assured bandwidth is secondary highest, the third highest is the not-assured bandwidth, and the priority of the best-effort bandwidth is the lowest.

In an exemplary embodiment, in step 12 of the S404, triggering the adjustment of the downstream/upstream rate ratio Mds/Mus of the communication link may include the steps described below.

In step A1, a required maximum downstream payload rate ATTNDRdsmaxnew and a required maximum upstream payload rate ATTNDRusmaxnew corresponding to each priority information of each QoS queue in the downstream buffer of the DPU and the upstream buffer of the CPE are calculated separately.

In step B1, according to a preset downstream fixed bandwidth MCRds and a preset upstream fixed bandwidth MCRus, calculation is performed with the required maximum downstream payload rate ATTNDRdsmaxnew and the required maximum upstream payload rate ATTNDRusmaxnew, and the adjusted downstream/upstream rate ratio Mds/Mus is obtained.

In an exemplary embodiment, upon determining that the priority information is the fixed bandwidth, the dynamic bandwidth allocation method provided by the embodiment of the present application may further include:

determining whether a sum of the upstream fixed bandwidth FBus and the downstream fixed bandwidth FBds is greater than an allocable upstream and downstream payload total bandwidth ATTNDRmaxestimate;
in determining that the sum of the upstream fixed bandwidth FBus and the downstream fixed bandwidth FBds is not greater than the allocable upstream and downstream payload total bandwidth ATTNDRmaxestimate, calculating the currently allocated maximum upstream payload rate ATTNDRusmaxnew corresponding to the upstream assured bandwidth ABus and the currently allocated maximum downstream payload rate ATTNDRdsmaxnew corresponding to the downstream assured bandwidth ABds separately;
determining whether a result ATTNDRremain of subtracting the currently allocated maximum upstream payload rate ATTNDRusmaxnew corresponding to the FBus and the maximum downstream payload rate ATTNDRdsmaxnew corresponding to the FBds from the ATTNDRmaxestimate is greater than a negligible bandwidth size deltaBBmin that does not require being allocated;
in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

In an exemplary embodiment, in determining that the priority information is the assured bandwidth, the dynamic bandwidth allocation method provided by the embodiment of the present application may further include:

calculating separately the currently allocated maximum upstream payload rate ATTNDRusmaxnew corresponding to the upstream assured bandwidth ABus and the currently allocated maximum downstream payload rate ATTNDRdsmaxnew corresponding to the downstream assured bandwidth ABds;
determining whether a result ATTNDRremain of subtracting the ATTNDRusmaxnew as well as the ATTNDRdsmaxnew from an allocable upstream and downstream payload total bandwidth ATTNDRmaxestimate is greater than a negligible bandwidth size deltaBBmin that does not require being allocated;
in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

In an exemplary embodiment, in determining that the priority information is the not-assured bandwidth, the dynamic bandwidth allocation method provided by the embodiment of the present application may further include:

according to the upstream not-assured bandwidth weight Wnaus and the downstream not-assured bandwidth weight Wnads, calculating separately the currently allocated maximum upstream payload rate ATTNDRusmaxnew corresponding to the upstream not-assured bandwidth NABus and the currently allocated maximum downstream payload rate ATTNDRdsmaxnew corresponding to the downstream not-assured bandwidth NABds;
determining whether a result ATTNDRremain of subtracting the ATTNDRusmaxnew as well as the ATTNDRdsmaxnew from an allocable upstream and downstream payload total bandwidth ATTNDRmaxestimate is greater than a negligible bandwidth size deltaBBmin that does not require being allocated;
in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

In an exemplary embodiment, in determining that the priority information is the best-effort bandwidth, the dynamic bandwidth allocation method provided by the embodiment of the present application may further include:

calculating separately the currently allocated maximum upstream payload rate ATTNDRusmaxnew corresponding to the upstream best-effort bandwidth BBus and the currently allocated maximum downstream payload rate ATTNDRdsmaxnew corresponding to the downstream best-effort bandwidth BBds;
determining whether a result ATTNDRremain of subtracting the ATTNDRusmaxnew as well as the ATTNDRdsmaxnew from an allocable upstream and downstream payload total bandwidth ATTNDRmaxestimate is greater than a negligible bandwidth size deltaBBmin that does not require being allocated;
in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

As can be seen from the above that the dynamic bandwidth allocation method provided by an embodiment of the present application may perform, according to the priority from high to low, bandwidth allocation for the fixed bandwidth, the assured bandwidth, the not-assured bandwidth and the best-effort bandwidth, here the priority order corresponds to the priority type in the step S404.

In an exemplary embodiment, before determining whether the traffic flow information matches at least one rule in the preset triggering rule list, the dynamic bandwidth allocation method provided by the embodiment of the present invention may further include the step described below.

In step 13, according to the priority information and the route attainable net rate information, at least one rule in the preset triggering rule list is configured.

In an exemplary embodiment, the process of transmitting, by the DPU, time division duplexing (TDD) frame configuration information corresponding to the adjusted downstream/upstream rate ratio Mds/Mus to the CPE may include the step described below.

In step 14, the TDD frame configuration information corresponding to the adjusted downstream/upstream rate ratio Mds/Mus is negotiated with the CPE and data transmission with the CPE is performed according to the negotiated and adjusted TDD frame configuration information.

In an exemplary embodiment, in step 14 of the step S406, negotiating the TDD frame configuration information corresponding to the adjusted downstream/upstream rate ratio Mds/Mus with the CPE and performing data transmission with the CPE according to the negotiated and adjusted TDD frame configuration information may include the steps described below.

In step A2, TDD frame configuration information corresponding to the adjusted downstream/upstream rate ratio Mds/Mus is transmitted to the CPE.

In step B2, the negotiated TDD frame configuration information corresponding to the adjusted downstream/upstream rate ratio Mds/Mus returned by the CPE is received.

In step C2, a TDD frame is configured according to the negotiated TDD frame configuration information, and data transmission and reception with the CPE are performed by using the TDD frame configuration information.

In summary, the dynamic bandwidth allocation method provided by the embodiment of the present application may be implemented as follows.

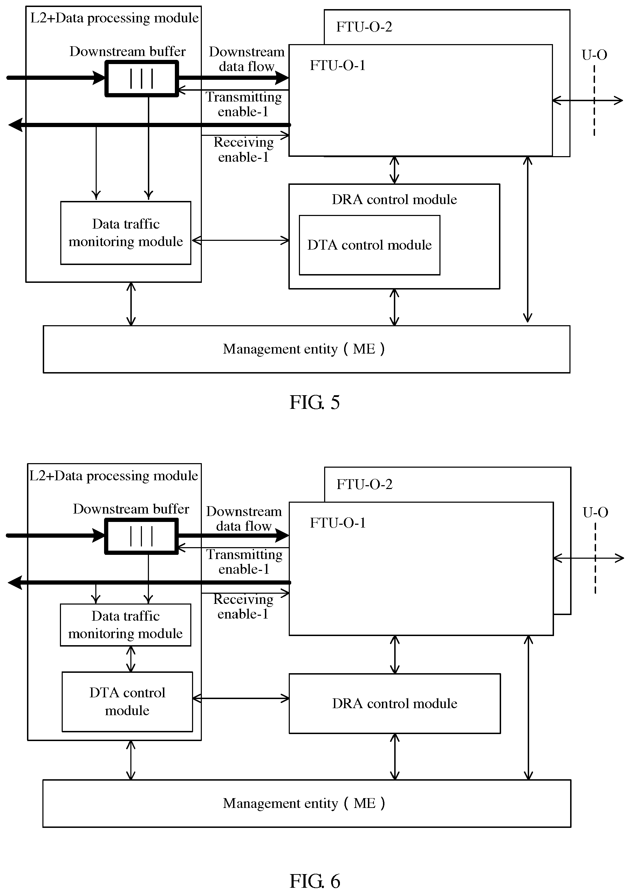

FIG. 5 is a schematic diagram of a FTU-O reference model I based on traffic monitor and DTA. FIG. 6 is a schematic diagram of a FTU-O reference model II based on traffic monitor and DTA. FTU-O reference models based on traffic monitor and DTA are shown in FIGS. 5 and 6. A data traffic monitoring module and a DTA control module are added for a DTA function, and there are two architectures according to the DTA control module. The data traffic monitoring module is used for monitoring the upstream traffic situation and at least one of the buffer size of each QoS queue in the downstream buffer and the rate of the data entering each queue, and reports the monitoring information to the DTA control module. The DTA control module uses, according to the buffer size and data rate of each QoS queue in downstream and upstream buffers, and based on downstream and upstream flows of user traffic, and the traffic type and priority corresponding to each traffic flow, uses the DTA control algorithm to determine whether to adjust the current downstream/upstream rate ratio (corresponding Mds/Mus). In determining that the ratio needs to be adjusted, the DTA control module calculates the Mds/Mus satisfying current upstream and downstream traffic and access traffic requirements, and the DPU transmits the new Mds/Mus to the CPE, such that the system performs the data transmission according to new TDD frame configuration information.

(1). Priority information and route attainable net rate information of each QoS queue in the downstream buffer of the DPU and the upstream buffer of the CPE is acquired.

A dynamic resource allocation (DRA) control module may acquire the priority situation of each QoS queue in the downstream and upstream buffers.

The priorities from high to low are the fixed bandwidth, the assured bandwidth, the not-assured bandwidth and the best-effort bandwidth, which correspond to different types of traffic.

Upstream and downstream priority queues and corresponding priorities are mapped according to the user traffic model and based on traffic type. Different queues correspond to different traffic flows, and have corresponding traffic types and priorities.

An accrual traffic flow enters the queue with corresponding priority according to its traffic type.

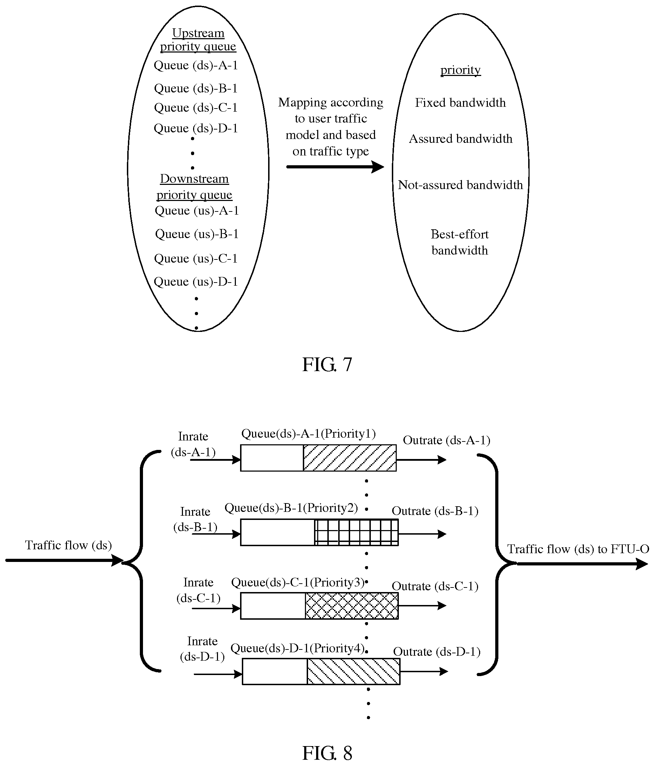

FIG. 7 is a schematic diagram of a priority mapping of queues. As shown in FIG. 7, Queue(ds)-A, Queue(ds)-B, Queue(ds)-C and Queue(ds)-D respectively correspond to the fixed bandwidth priority, the assured bandwidth priority, the not-assured bandwidth priority, and the best-effort bandwidth priority. The Queue(ds)-A-1 corresponds to the first fixed bandwidth priority queue, and so on.

Meanwhile, the dynamic resource allocation control module acquires TDD frame configuration information, which mainly includes: the number of downstream symbols (Mds) and the number of upstream symbols (Mus). The dynamic resource allocation control module obtains the currently attainable maximum downstream rate ATTNDRdsmax and the currently attainable maximum upstream rate ATTNDRusmax. ATTDRdsmax includes ATTNDRdsmax (which may be used for payload rate of the DTU (data transfer unit) payload downstream transmission), and management & control rate (ds) (MCRds, which is used for managing and controlling a rate of downstream information transmission). The ATTDRusmax includes ATTNDRusmax (which may be used for the payload rate of the DTU payload upstream transmission), and management & control rate (us) (MCRus, which is used for managing and controlling a rate of upstream information transmission). The ratio between Mds and Mus in the TDD frame corresponds to ATTNDRdsmax and ATTNDRusmax.

(2). The buffer size and rate information of data entering the queue in the downstream buffer of the DPU and the upstream buffer of the CPE are acquired. The upstream relevant information is reported to the DPU by the CPE.

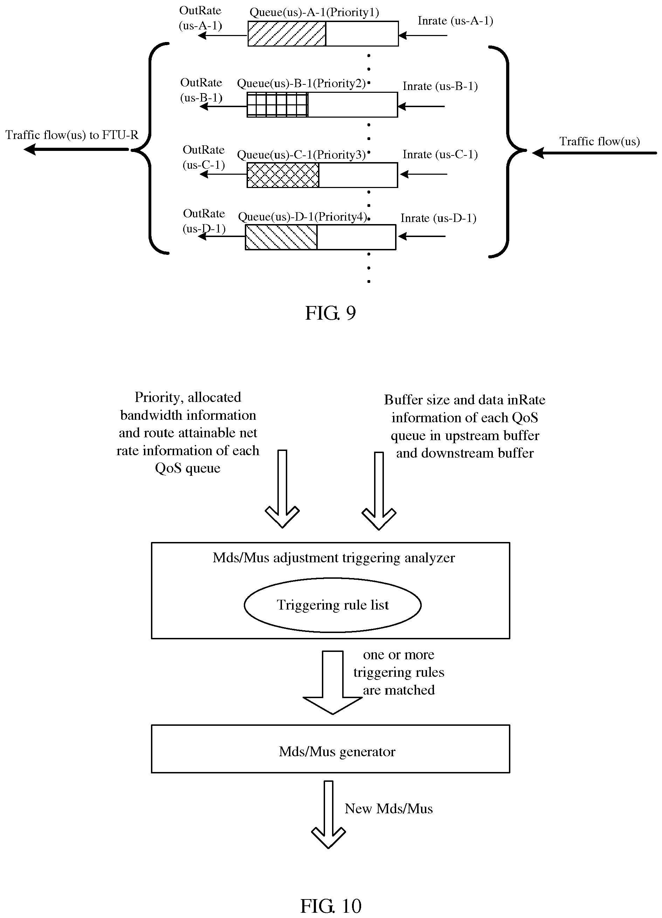

The dynamic resource allocation control module acquires the total traffic information of the upstream and at least one of the buffer size of each QoS queue in the downstream buffer and the rate of data entering each queue. Meanwhile, the dynamic resource allocation control module requests the CPE to report at least one of the buffer size of each QoS queue in the upstream buffer and the rate of data entering each queue. Each QoS queue in the downstream buffer of the DPU and the upstream buffer of the CPE is allocated with a different priority separately. FIG. 8 is a schematic diagram of queues of the downstream buffer. FIG. 9 is a schematic diagram of queues of the upstream buffer. As shown in FIGS. 8 and 9, the queue types A, B, C and D respectively correspond to Priority 1 (the fixed bandwidth), Priority 2 (the assured bandwidth), Priority 3 (the not-assured bandwidth) and Priority 4 (the best-effort bandwidth). Each queue type has 0, 1 or multiple queues. Each queue has a corresponding inRate (which is determined by the upstream traffic flow) and a corresponding outRate (which is determined by a scheduling algorithm).

InRate (ds-A) represents an inRate sum of the data entering all the downstream priority queues with the type of Queue(ds)-A. InRate(ds-B) represents an inRate sum of the data entering all the downstream priority queues with the type of Queue(ds)-B. InRate(ds-C) represents an inRate sum of the data entering all the downstream priority queues with the type of Queue(ds)-C. InRate(ds-D) represents an inRate sum of the data entering all the downstream priority queues with the type of Queue(ds)-D.

InRate (us-A) represents a rate sum of all data entering the upstream priority queues with the type of Queue(us)-A. InRate (us-B) represents a rate sum of all data entering the upstream priority queues with the type of Queue(us)-B. InRate (us-C) represents a rate sum of all data entering the upstream priority queues with the type of Queue(us)-C. InRate (us-D) represents a rate sum of all data entering the upstream priority queues with the type of Queue(us)-D.

(3) Whether the current Mds/Mus needs to be adjusted is analyzed through the preset triggering rule list and whether the current traffic flow information matches one or more rules is determined. In response to determining that the current Mds/Mus needs to be adjusted, a new Mds/Mus satisfying upstream/downstream traffic and access traffic requirements is calculated.

Since Mds/Mus adjustment of the TDD frame needs the interaction between FTU-O and FTU-R and the newest Mds/Mus is adopted in the next superframe (about 6 ms) after completing the interaction and adjustment, it takes a long time from starting Mds/Mus to the valid and operation of the new Mds/Mus.

FIG. 10 is a structural diagram of a DTA control module. As shown in FIG. 10, the DTA control module includes an Mds/Mus adjustment triggering analyzer and an Mds/Mus generator. The triggering rule list is preset in the Mds/Mus adjustment triggering analyzer. Whether one or more rules in the rule list are matched is determined according to the buffer size and data inRate information of each queue in the downstream buffer of the DPU and the upstream buffer of the CPE. In response to determining that one or more rules in the rule list are matched, the Mds/Mus adjustment is triggered and submitted to the Mds/Mus generator to process. In response to determining that no rule in the rule list is matched, then Mds/Mus adjustment is not submitted to the Mds/Mus generator.

When the priority, allocated bandwidth information and route attainable net rate information of the QoS queue are changed, and if one or more triggering rules in the rule list are matched, the Mds/Mus adjustment is triggered.

Assuming that in the downstream buffer, the queue types A, B, C and D respectively have Na, Nb, Nc and Nd queues. The fixed bandwidth allocated for the queue type A (the fixed bandwidth) is FBds (the bandwidths corresponding to the Na queues are respectively FBds(1),...,FBds(Na), where FBds= FBds(1)+...+ FBds(Na)). The assured bandwidth allocated for the queue type B (the assured bandwidth) is ABds (i.e., a sum of the assured bandwidths allocated for the queues of the queue type B). The not-assured bandwidth allocated for the queue type C (the not-assured bandwidth) is NABds (i.e., a sum of the not-assured bandwidths allocated for the queues of the queue type C) and the weight is Wnads. The best-effort bandwidth allocated for the queue type D (the best-effort bandwidth) is BBds (i.e., a sum of the best-effort bandwidths allocated for the queues of the queue type D) and the weight is Wbeds.

Assuming that in the upstream buffer, the queue types A, B, C and D respectively have Ma, Mb, Mc and Md queues. The fixed bandwidth allocated for the queue type A (the fixed bandwidth) is FBus (the bandwidths corresponding to the queues are respectively FBus(1),...,FBus(Na)). The assured bandwidth allocated for the queue type B (the assured bandwidth) is ABus. The not-assured bandwidth allocated for the queue type C (the not-assured bandwidth) is NABus and the weight is Wnaus. The best-effort bandwidth allocated for the queue type D (the best-effort bandwidth) is BBus and the weight is Wbeus.

The current Mds/Mus is marked as Mds/Muscurrent corresponding to the current maximum downstream attainable net rate (ATTNDRdsmax)current and the current maximum upstream attainable net rate (ATTNDRusmax)current.

(a) A rule of triggering the Mds/Mus adjustment is set.

The rule of triggering the Mds/Mus adjustment is set according to the priority, allocated bandwidth information and route attainable net rate information of each QoS queue in the upstream and downstream queues. In response to determining that the current buffer size and data inRate information of each QoS queue in the downstream buffer of the DPU and the upstream buffer of the CPE match one or more rules, the Mds/Mus adjustment is triggered. Meanwhile, the change of the priority, the change of the allocated bandwidth information and the change of the route attainable net rate information of each Qos queue also trigger the Mds/Mus adjustment.

Assuming that Persistent Time{} is a duration in which the logic expression within {} is true, Threshold1, Threshold2, Threshold3, Threshold4, Threshold5, and Threshold6 are respectively corresponding duration interval thresholds which may be preset. Coef1 and coef2 are adjustment factors for avoiding the distortion problem of the traffic rate caused by factors such as jitter, congestion and burst, and the values of coef1 and coef2 may be within a range of 1.0 to 1.2 or be preset. Min (value1,...,valueN) represents a minimum value of value1,...,valueN in().

The rule of triggering the Mds/Mus adjustment may be defined as follows:

i) FBds > (ATTNDRdsmax)current and FBus < ATTNDRusmax;

ii) FBus > (ATTNDRusmax)current and FBds < ATTNDRdsmax;

iii) PersistentTime{min(ABds, InRate(ds-B))+ FBds > (ATTNDRdsmax)current*coef1} > Threshold1;

iv) PersistentTime{ min(ABus, InRate(us-B))+ FBus> (ATTNDRusmax)current*coef2} > Threshold2;

v) (ATTNDR)remain>0 and PersistentTime{min(ABds, InRate(ds-B))+min(NABds, InRate(ds-C), (ATTNDR)remain×Wnads/(Wnaus+Wnads))+ FBds> (ATTDRdsmax)current*coef 1} > Threshold3;

$$(ATTNDR)remain = (ATTNDRmax)current - FBds - FBus - min(ABds, InRate(ds\text{-}B)) - min(ABus, InRate(us\text{-}B));$$

vi) (ATTNDR)remain>0 and PersistentTime{min(ABus, InRate(us-B))+min(NABus, InRate(us-C), (ATTNDR)remain×Wnaus/(Wnaus+Wnads))+ FBus> (ATTDRusmax)current*coef2} > Threshold4;

$$(ATTNDR)remain = (ATTNDRmax)current - FBds - FBus - min(ABds, InRate(ds\text{-}B)) - min(ABus, InRate(us\text{-}B));$$

vii) (ATTNDR)remain>0 and PersistentTime{min(ABds, InRate(ds-B))+ min(NABds, InRate(ds-C), (ATTNDR)remain×Wnads/(Wnaus+Wnads))+ min(BBds, InRate(ds-D), (ATTNDR)remain×Wbeds/(Wbeus+Wbeds))+ FBds> (ATTDRdsmax)current*coef1} > Threshold5;

$$(ATTNDR)remain = (ATTNDRmax)current - FBds - FBus - min(ABds, InRate(ds-B))- min(ABus, InRate(us-B))- min(NABds, InRate(ds-C), (ATTNDR)remain×Wnads/(Wnaus+Wnads))- min(NABus, InRate(us-C), (ATTNDR)remain×Wnaus/(Wnaus+Wnads));$$

viii) (ATTNDR)remain>0 and PersistentTime{min(ABus, InRate(us-B))+ min(NABus, InRate(us-C), (ATTNDR)remain×Wnaus/(Wnaus+Wnads))+ min(BBus, InRate(us-D), (ATTNDR)remain×Wbeus/(Wbeus+Wbeds))+ FBus> (ATTDRusmax)current*coef2} > Threshold6;

$$(ATTNDR)remain = (ATTNDRmax)current - FBds - FBus - min(ABds, InRate(ds-B))- min(ABus, InRate(us-B))- min(NABds, InRate(ds-C), (ATTNDR)remain×Wnads/(Wnaus+Wnads))- min(NABus, InRate(us-C), (ATTNDR)remain×Wnaus/(Wnaus+Wnads))$$

(b) New Mds/Mus calcaulation:
(ATTNDRmax)estimate is a total allocable upstream and downstream payload bandwidth, then

$$(ATTNDRmax)estimate = (ATTNDRdsmax)current + (ATTNDRusmax)current + deltaNDR;$$

It is to be noted that deltaNDR is a total payload rate deviation that may be caused by Mds/Mus change, deltaNDR may be preset. Assuming that (ATTNDRdsmax)new is a currently allocated downstream payload rate. The (ATTNDRusmax)new is a current allocated upstream payload rate. The ATTNDRremain is a total remaining bandwidth after the current allocation. DeltaBBmin is a negligible bandwidth size that does not need to be allocated, and may be set within a range of 0 to 1kbps.
A new Mds/Mus calculation process is as follows:
Initializing (ATTNDRdsmax)new to be zero, (ATTNDRusmax)new to be zero and (ATTNDR)remain to be (ATTNDRmax)estimate, i.e.,
(ATTNDRdsmax)new=0;
(ATTNDRusmax)new=0;
ATTNDRremain=(ATTNDRmax)estimate;

II. Allocating the fixed bandwidth
if FBds+ FBus > (ATTNDRmax)estimate, abnormality is reported and Mds/Mus configuration process is exited;
if FBds+ FBus ≤ (ATTNDRmax)estimate, then
(ATTNDRdsmax)new=FBds;
(ATTNDRusmax)new=FBus;
(ATTNDR)remain = (ATTNDRmax)estimate-(ATTNDRdsmax)new-(ATTNDRusmax)new;
if (ATTNDR)remain <deltaBBmin, then there is no need to continue the bandwidth allocation, and Mds/Mus is directly calculated.
III. Allocating the assured bandwidth
(ATTNDRdsmax)new=FBds+ min(ABds, InRate(ds-B));
(ATTNDRusmax)new=FBus+min(ABus, InRate(us-B));
(ATTNDR)remain=(ATTNDRmax)estimate - (ATTNDRdsmax)new-(ATTNDRusmax)new;
if (ATTNDR)remain <deltaBBmin, there is no need to continue to the bandwidth allocation, and Mds/Mus is directly calculated.

IV. Allocating the not-assured bandwidth

(ATTNDRdsmax)new = FBds+ min(ABds, InRate(ds-B))+min(NABds, InRate(ds-C), (ATTNDR)remain×Wnads/(Wnaus+Wnads));

(ATTNDRusmax)new=FBus+min(ABus, InRate(us-B))+ min(NABds, InRate(ds-C), (ATTNDR)remain×Wnads/(Wnaus+Wnads));

(ATTNDR)remain = (ATTNDRmax)estimate-(ATTNDRdsmax)new-(ATTNDRusmax)new;

if (ATTNDR)remain <deltaBBmin, there is no need to continue to the bandwidth allocation, and Mds/Mus is directly calculated.

V. Allocating the best-effort bandwidth

(ATTNDRdsmax)new = FBds+ min(ABds, InRate(ds-B))+min(NABds, InRate(ds-C), (ATTNDR)remain×Wnads/(Wnaus+Wnads))+ min(BBds, InRate(ds-D), (ATTNDR)remain×Wbeds/(Wbeus+Wbeds));

(ATTNDRusmax)new=FBus+min(ABus, InRate(us-B))+ min(NABds, InRate(ds-C), (ATTNDR)remain×Wnads/(Wnaus+Wnads))+ min(BBus, InRate(us-D), (ATTNDR)remain×Wbeus/(Wbeus+Wbeds));

(ATTNDR)remain = (ATTNDRmax)estimate-(ATTNDRdsmax)new-(ATTNDRusmax)new;

VI. Calculating Mds/Mus

By using (ATTNDRdsmax)new and (ATTNDRusmax)new and considering the downstream fixed bandwidth MCRds and the upstream fixed bandwidth MCRus for managing and controlling information transmission, the Mds/Mus is calculated. An estimation formula of Mds/Mus is : Mds/Mus≈ ((ATTNDRdsmax)new +MCRds) / ((ATTNDRusmax)new+MCRus).

The DPU transmits the new Mds/Mus to the CPE. The CPE receives the updating notification, and then determines the effective time and/or a TDD frame position by negotiating with the DPU. After reaching the effective time or the TDD frame position, the DPU and the CPE configure the TDD frame by using the new Mds/Mus and perform data transmission and reception.

At present, the xDSL/G.fast system preconfigures the downstream/upstream rate ratio (i.e., Mds/Mus) in the initialization phase, and the downstream/upstream rate ratio cannot be dynamically adjusted in the showtime phase. If the Mds/Mus needs to be adjusted, link should be restarted. Therefore, G.fast does not support DBA, i.e., does not support dynamic time allocation (DTA). The present invention provides a method for implementing the DTA in the DSL/G.fast system. With the method, the downstream/upstream rate ratio may be dynamically adjusted in real time based on the downstream and upstream traffic situation, and the traffic type and priority corresponding to each traffic flow, effectively meeting the access requirements of various types of user traffic and ensuring the QoS requirements of the traffic within a given user bandwidth range.

From the description of the implementation modes described above, it will be apparent to those skilled in the art that the method in the embodiments described above may be implemented by software plus a necessary general-purpose hardware platform, or may of course be implemented by hardware. However, in many cases, the former is a preferred implementation mode. Based on this understanding, the solution provided by the present application substantially, or the part contributing to the existing art, may be embodied in the form of a software product. The software product is stored on a storage medium (such as a ROM/RAM, a magnetic disk or an optical disk) and includes several instructions for enabling a terminal device (which may be a mobile phone, a computer, a server or a network device) to execute the methods according to the embodiments of the present application.

Embodiment two

This embodiment further provides a dynamic bandwidth allocation device for implementing the above-mentioned embodiments and preferred embodiments. What has been described will not be repeated. As used below, the term "module" may be software, hardware or a combination thereof capable of implementing predetermined functions. The device in the embodiment described below is preferably implemented by software, but implementation by hardware or by a combination of software and hardware is also possible and conceived.

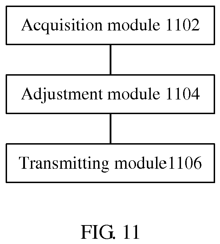

FIG. 11 is a block diagram of a dynamic bandwidth allocation device according to an embodiment of the present invention. As shown in FIG. 11, the device includes: an acquisition module 1102 and an adjustment module 1104 and a transmitting module 1106.

The acquisition module 1102 is configured to acquire traffic flow information of each QoS queue in a downstream buffer of a DPU and an upstream buffer of the CPE.

The adjustment module 1104 is configured to determine, according to the traffic flow information, a downstream/upstream rate ratio Mds/Mus.

The transmitting module 1106 is configured to transmit TDD frame configuration information corresponding to the adjusted downstream/upstream rate ratio Mds/Mus to the CPE.

According to the dynamic bandwidth allocation device provided by an embodiment of the present invention, the traffic flow information of each QoS queue in the downstream buffer of the DPU and the upstream buffer of the CPE is acquired, a downstream/upstream rate ratio Mds/Mus is determined according to the traffic flow information; and TDD frame configuration information corresponding to the adjusted downstream/upstream rate ratio Mds/Mus is transmitted to the CPE. Therefore, a problem that the traffic QoS is reduced because G.fast does not support the dynamic bandwidth allocation may be solved, thereby improving the traffic QoS.

In an exemplary embodiment, the traffic flow information may include at least one of: a buffer data size, priority information of each QoS queue in the downstream buffer of the DPU and the upstream buffer of the CPE, rate information of data entering each QoS queue in the downstream buffer of the DPU and the upstream buffer of the CPE, total rate information of data entering the downstream buffer of the DPU and total rate information of data entering the upstream buffer of the CPE; where the traffic flow information of each QoS queue in the upstream buffer of the CPE is reported by the CPE.

In an exemplary embodiment, the acquisition module 1102 may include: a first acquisition unit, which is configured to acquire: the buffer data size and the priority information of each QoS queue in the downstream buffer of the DPU and the upstream buffer of the CPE, the rate information of data entering each QoS queue in the downstream buffer of the DPU and the upstream buffer of the CPE, the total rate information of data entering the downstream buffer of the DPU and the total rate information of data entering the upstream buffer of the CPE; where the priority information includes at least one of: a priority type corresponding to each QoS queue, and bandwidth size and weight information allocated correspondingly.

In an exemplary embodiment, the priority type includes at least one of: a fixed bandwidth, an assured bandwidth, a not-assured bandwidth and a best-effort bandwidth.

In an exemplary embodiment, the acquisition module 1102 may include:

a second acquisition unit, which is configured to acquire route attainable net rate information of the each QoS queue in the downstream buffer of the DPU and the upstream buffer of the CPE, the buffer data size of each QoS queue in the upstream buffer, the total rate information of data entering the upstream buffer and the total rate information of data entering the downstream buffer, and the rate information of data entering each QoS queue in the upstream buffer.

In an exemplary embodiment, the second acquisition unit may include:

the first acquisition subunit, which is configured to obtain the route attainable net rate information by acquiring TDD frame configuration information and according to a current route situation, where the TDD frame configuration information includes: the number of downstream symbols Mds and a=the number of upstream symbols Mus; the route attainable net rate information includes a maximum downstream attainable net rate ATTNDRdsmax and a maximum upstream attainable net rate ATTNDRusmax.

In an exemplary embodiment, the adjustment module 1104 may include:

a determination unit, which is configured to determine whether the traffic flow information matches at least one rule in a preset triggering rule list; and
an adjustment unit, which is configured to trigger, in determining that the traffic flow information matches at least one rule in the preset triggering rule list, adjusting of the downstream/upstream rate ratio Mds/Mus of a communication link.

In an exemplary embodiment, the determination unit may include: a first determination subunit, which is configured to determine whether the total rate information of data entering the upstream buffer and the total rate information of data entering the downstream buffer match at least one rule in the preset triggering rule list.

In an exemplary embodiment, the determination unit may include: a second determination subunit, which is configured to determine whether at least one of the rate information of data entering each QoS queue in the downstream buffer of the DPU and the upstream buffer of the CPE and the buffer data size matches at least one rule in the preset triggering rule list.

In an exemplary embodiment, the determination unit may include: a third determination subunit, which is configured to determine whether at least one of the priority information, the rate information of data entering each QoS queue in the downstream buffer of the DPU and the upstream buffer of the CPE, the buffer data size and the route attainable net rate information matches at least one rule in the preset triggering rule list.

In an exemplary embodiment, the third determination subunit may be further configure to determine whether the priority information matches at least one rule in the preset triggering rule list in at least one of the following manners:

determining whether a bandwidth FBds of the fixed bandwidth matches at least one rule in a preset triggering rule list;
determining whether a bandwidth ABds of the assured bandwidth matches at least one rule in a preset triggering rule list;
determining whether at least one of the a downstream not-assured bandwidth NABds of the not-assured bandwidth, a downstream not-assured bandwidth weight Wnads corresponding to the NABds, an upstream not-assured bandwidth NABus and an upstream not-assured bandwidth weight Wnaus corresponding to the NABus matches at least one rule in the preset triggering rule list; and

determining whether at least one of a downstream best-effort bandwidth BBds of the best-effort bandwidth, a downstream best-effort bandwidth weight Wbeds corresponding to the BBds, an upstream best-effort bandwidth BBus and an upstream best-effort bandwidth weight Wbeus corresponding to the BBus matches at least one rule in the preset triggering rule list.

In an exemplary embodiment, the adjustment unit may include:

a first calculation subunit, which is configured to calculate a required maximum downstream payload rate ATTNDRdsmaxnew and a required maximum upstream payload rate ATTNDRusmaxnew corresponding to each priority information of each QoS queue in the downstream buffer of the DPU and the upstream buffer of the CPE separately; and

a second calculation subunit, which is configured to calculate, according to a preset downstream fixed bandwidth MCRds and a preset upstream fixed bandwidth MCRus, with the required maximum downstream payload rate ATTNDRdsmaxnew and the required maximum upstream payload rate ATTNDRusmaxnew, and obtain the adjusted downstream/upstream rate ratio Mds/Mus.

In an exemplary embodiment, the adjustment unit may include:

the first determination subunit, which is configured to determine, in determining that the priority information is the fixed bandwidth, whether a sum of the upstream fixed bandwidth FBus and the downstream fixed bandwidth FBds is greater than an allocable upstream and downstream payload total bandwidth ATTNDRmaxestimate;

the second determination subunit, which is configured to calculate, in determining that the sum is not greater than the ATTNDRmaxestimate, the currently allocated maximum upstream payload rate ATTNDRusmaxnew corresponding to the upstream fixed bandwidth FBus and the currently allocated maximum downstream payload rate ATTNDRdsmaxnew corresponding to the downstream fixed bandwidth FBds; and determine whether a result ATTNDRremain of subtracting the currently allocated maximum upstream payload rate ATTNDRusmaxnew corresponding to the FBus and the currently allocated maximum downstream payload rate ATTNDRdsmaxnew corresponding to the FBds from the ATTNDRmaxestimate is greater than a negligible bandwidth size deltaBBmin that does not require being allocated; and

a third calculation subunit, which is configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

In an exemplary embodiment, the adjustment unit may include:

a fourth calculation subunit, which is configured to calculate, in determining that the priority information is the assured bandwidth, the currently allocated maximum upstream payload rate ATTNDRusmaxnew corresponding to the upstream assured bandwidth ABus and the currently allocated maximum downstream payload rate ATTNDRdsmaxnew corresponding to the downstream assured bandwidth ABds;

the third determination subunit, which is configured to determine whether a result ATTNDRremain of subtracting the ATTNDRusmaxnew and the ATTNDRdsmaxnew from the ATTNDRmaxestimate is greater than a negligible bandwidth size deltaBBmin that does not require being allocated; and

a fifth calculation subunit, which is configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

In an exemplary embodiment, the adjustment unit may include:

a sixth calculation subunit, which is configured to calculate, in determining that the priority information is the not-assured bandwidth, according to the upstream not-assured bandwidth weight Wnaus and the downstream not-assured bandwidth weight Wnads, the currently allocated maximum upstream payload rate ATTNDRusmaxnew corresponding to the upstream not-assured bandwidth NABus and the currently allocated maximum downstream payload rate ATTNDRdsmaxnew corresponding to the downstream not-assured bandwidth NABds;

the fourth determination subunit, which is configured to determine whether a result ATTNDRremain of subtracting the ATTNDRusmaxnew and the ATTNDRdsmaxnew from ATTNDRmaxestimate is greater than a negligible bandwidth size deltaBBmin that does not require being allocated;
a seventh calculation unit, which is configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

In an exemplary embodiment, the adjustment unit may include:

an eighth calculation subunit, which is configured to calculate, in determining that the priority information is the best-effort bandwidth, the currently allocated maximum upstream payload rate ATTNDRusmaxnew corresponding to the upstream best-effort bandwidth BBus and the currently allocated maximum downstream payload rate ATTNDRdsmaxnew corresponding to the downstream best-effort bandwidth BBds;
the fifth determination subunit, which is configured to determine whether a result ATTNDRremain of subtracting the ATTNDRusmaxnew and the ATTNDRdsmaxnew from ATTNDRmaxestimate is greater than a negligible bandwidth size deltaBBmin that does not require being allocated; and
a ninth calculation subunit, which is configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

In an exemplary embodiment, the dynamic bandwidth allocation device provided by the embodiment of the present application may further include: a rule configuration module, which is configured to configure, before determining whether the traffic flow information matches at least one rule in the preset triggering rule list, according to the priority information and the route attainable net rate information, at least one rule in the preset triggering rule list.
In an exemplary embodiment, the transmitting module 1106 may be configured to negotiate the TDD frame configuration information corresponding to the adjusted downstream/upstream rate ratio Mds/Mus with the CPE and perform data transmission with the CPE according to the negotiated and adjusted TDD frame configuration information.
In an exemplary embodiment, the transmitting module 1106 may include:

a transmitting unit, which is configured to transmit TDD frame configuration information corresponding to the adjusted downstream/upstream rate ratio Mds/Mus to the CPE;
a receiving unit, which is configured to receive the negotiated TDD frame configuration information corresponding to the adjusted downstream/upstream rate ratio Mds/Mus returned by the CPE; and
a configuration unit, which is configured to configure, according to the negotiated TDD frame configuration information, a TDD frame, and perform data transmission and reception with the CPE by using the TDD frame configuration information.

The various modules described above may be implemented by software or hardware. Implementation by hardware may, but may not necessarily, be performed by the following methods: The various modules described above are located in a same processor or their respective processors.

Embodiment three

Another embodiment of the present application provides a dynamic bandwidth allocation system, which includes a DPU and a CPE. The DPU and the CPE are communicatively connected to each other, and the DPU includes the dynamic bandwidth allocation device shown in the FIG. 11.

Embodiment four

This embodiment further provides a machine-readable medium. In this embodiment, the machine-readable medium may be configured to store program codes for executing the steps described below.
In step S41, traffic flow information of each QoS queue in a downstream buffer of a DPU and a upstream buffer of a CPE is acquired.
In step S42, according to the traffic flow information, a downstream/upstream rate ratio Mds/Mus is determined.
In step S43, the DPU transmits TDD frame configuration information corresponding to the adjusted downstream/upstream rate ratio Mds/Mus to the CPE.
In an exemplary embodiment, the machine-readable medium may be configured to store program codes for executing the steps described below.

In step S411, the priority information of the each QoS queue in the downstream buffer of the DPU and the upstream buffer of the CPE, the buffer data size, the rate information of data entering each QoS queue in the downstream buffer of the DPU and the upstream buffer of the CPE, the total rate information of data entering the downstream buffer of the DPU and the total rate information of data entering the upstream buffer of the CPE are acquired. The priority information includes at least one of: a priority type corresponding to each QoS queue, and bandwidth size and weight information allocated correspondingly.

In an exemplary embodiment, the machine-readable medium may be configured to store program codes for executing the following steps: acquiring route attainable net rate information of each QoS queue in the downstream buffer of the DPU and the upstream buffer of the CPE, the buffer data size of each QoS queue in the upstream buffer, the total rate information of data entering the upstream buffer and the total rate information of data entering the downstream buffer, and the rate information of data entering each QoS queue in the upstream buffer.

In this embodiment, the machine-readable medium may include, but is not limited to, a U disk, a read-only memory (ROM), a random access memory (RAM), a mobile hard disk, a magnetic disk, an optical disk or another medium capable of storing program codes.

In an exemplary embodiment, a processor may execute the following steps according to the program codes stored in the machine-readable medium: acquiring route attainable net rate information of each QoS queue in the downstream buffer of the DPU and the upstream buffer of the CPE, the buffer data size of each QoS queue in the upstream buffer, the total rate information of data entering the upstream buffer and the total rate information of data entering the downstream buffer, and the rate information of data entering each QoS queue in the upstream buffer.

In this embodiment, the processor may execute the following step according to the program codes stored in the machine-readable medium: obtaining the route attainable net rate information by acquiring TDD frame configuration information and according to a current route situation, where the TDD frame configuration information includes: the number of downstream symbols Mds and the number of upstream symbols Mus; the route attainable net rate information includes a maximum downstream attainable net rate ATTNDRdsmax and a maximum upstream attainable net rate ATTNDRusmax.

In this embodiment, the processor may execute the following steps according to the program codes stored in the machine-readable medium: determining whether the traffic flow information matches at least one rule in a preset triggering rule list; in determining that the traffic flow information matches at least one rule in the preset triggering rule list, triggering the adjustment of the downstream/upstream rate ratio Mds/Mus of a communication link.

In this embodiment, the processor may execute the following step according to the program codes stored in the machine-readable medium: determining whether the total rate information of data entering the upstream buffer and the total rate information of data entering the downstream buffer match at least one rule in the preset triggering rule list.

In this embodiment, the processor may execute the following step according to the program codes stored in the machine-readable medium: determining whether at least one of the rate information of data entering each QoS queue in the downstream buffer of the DPU and the upstream buffer of the CPE and the buffer data size matches at least one rule in the preset triggering rule list.

In this embodiment, the processor may execute the following step according to the program codes stored in the machine-readable medium: determining whether at least one of the priority information, the rate information of data entering each QoS queue in the downstream buffer of the DPU and the upstream buffer of the CPE, the buffer data size and the route attainable net rate information matches at least one rule in the preset triggering rule list.

In this embodiment, the processor may execute the following steps according to the program codes stored in the machine-readable medium: determining whether the priority information matches at least one rule in the preset triggering rule list in at least one of the following manners: determining whether a downstream fixed bandwidth FBds and an upstream fixed bandwidth FBus of the fixed bandwidth match at least one rule in the preset triggering rule list; determining whether a downstream assured bandwidth ABds and an upstream assured bandwidth ABus of the assured bandwidth match at least one rule in the preset triggering rule list; determining whether at least one of the a downstream not-assured bandwidth NABds of the not-assured bandwidth, a downstream not-assured bandwidth weight Wnads corresponding to the NABds, an upstream not-assured bandwidth NABus and an upstream not-assured bandwidth weight Wnaus corresponding to the NABus matches at least one rule in the preset triggering rule list; and determining whether at least one of a downstream best-effort bandwidth BBds of the best-effort bandwidth, a downstream best-effort bandwidth weight Wbeds corresponding to the BBds, an upstream best-effort bandwidth BBus and an upstream best-effort bandwidth weight Wbeus corresponding to the BBus matches at least one rule in the preset triggering rule list.

In this embodiment, the processor may execute the following steps according to the program codes stored in the machine-readable medium: calculating a required maximum downstream payload rate ATTNDRdsmaxnew and a required maximum upstream payload rate ATTNDRusmaxnew corresponding to each priority information of each QoS queue in the downstream buffer of the DPU and the upstream buffer of the CPE separately; calculating, according to a preset downstream fixed bandwidth MCRds and a preset upstream fixed bandwidth MCRus, with the required maximum downstream payload rate ATTNDRdsmaxnew and the required maximum upstream payload rate ATTNDRusmaxnew, and obtaining the adjusted downstream/upstream rate ratio Mds/Mus.

In this embodiment, the processor may execute the following steps according to the program codes stored in the machine-readable medium: determining whether a sum of the upstream fixed bandwidth FBus and the downstream fixed bandwidth FBds is greater than an allocable upstream and downstream payload total bandwidth ATTNDRmaxestimate; in determining that the sum is not greater than the ATTNDRmaxestimate, calculating the currently allocated maximum upstream payload rate ATTNDRusmaxnew corresponding to the upstream fixed bandwidth FBus and the currently allocated maximum downstream payload rate ATTNDRdsmaxnew corresponding to the downstream fixed bandwidth FBds; and determining whether a result ATTNDRremain of subtracting the currently allocated maximum upstream payload rate ATTNDRusmaxnew corresponding to the FBus and the currently allocated maximum downstream payload rate ATTNDRdsmaxnew corresponding to the FBds from the ATTNDRmaxestimate is greater than a negligible bandwidth size deltaBBmin that does not require being allocated; in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

In this embodiment, the processor may execute the following steps according to the program codes stored in the machine-readable medium: calculating the currently allocated maximum upstream payload rate ATTNDRusmaxnew corresponding to the upstream assured bandwidth ABus and the currently allocated maximum downstream payload rate ATTNDRdsmaxnew corresponding to the downstream assured bandwidth ABds; determining whether a result ATTNDRremain of subtracting the ATTNDRusmaxnew and the ATTNDRdsmaxnew from the ATTNDRmaxestimate is greater than a negligible bandwidth size deltaBBmin that does not require being allocated; and in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

In this embodiment, the processor may execute the following steps according to the program codes stored in the machine-readable medium: calculating the currently allocated maximum upstream payload rate ATTNDRusmaxnew corresponding to the upstream assured bandwidth ABus and the currently allocated maximum downstream payload rate ATTNDRdsmaxnew corresponding to the downstream assured bandwidth ABds; determining whether a result ATTNDRremain of subtracting the ATTNDRusmaxnew as well as the ATTNDRdsmaxnew from ATTNDRmaxestimate is greater than a negligible bandwidth size deltaBBmin that does not require being allocated; and in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

In this embodiment, the processor may execute the following steps according to the program codes stored in the machine-readable medium: calculating the currently allocated maximum upstream payload rate ATTNDRusmaxnew corresponding to the upstream best-effort bandwidth BBus and the currently allocated maximum downstream payload rate ATTNDRdsmaxnew corresponding to the downstream best-effort bandwidth BBds; determining whether a result ATTNDRremain of subtracting the ATTNDRusmaxnew as well as the ATTNDRdsmaxnew from ATTNDRmaxestimate is greater than a negligible bandwidth size deltaBBmin that does not require being allocated; and in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

In this embodiment, the processor may execute the following step according to the program codes stored in the machine-readable medium: configuring, according to the priority information and the route attainable net rate information, at least one rule in the preset triggering rule list.

In this embodiment, the processor may execute the following step according to the program codes stored in the machine-readable medium: negotiating the TDD frame configuration information corresponding to the adjusted downstream/upstream rate ratio Mds/Mus with the CPE and performing the data transmission with the CPE according to the negotiated and adjusted TDD frame configuration information.

In this embodiment, the processor may execute the following step according to the program codes stored in the machine-readable medium: transmitting TDD frame configuration information corresponding to the adjusted downstream/upstream rate ratio Mds/Mus to the CPE, receiving the negotiated TDD frame configuration information corresponding to the adjusted downstream/upstream rate ratio Mds/Mus returned by the CPE; and configuring a TDD frame according to the negotiated TDD frame configuration information, and performing data transmission and reception with the CPE by using the TDD frame configuration information.

For examples in this embodiment, reference may be made to the examples described in the embodiments and exemplary implementation modes described above, and the examples will not be repeated in this embodiment.

It should be understood by those skilled in the art that functional modules/units in all or part of the steps of the method, the system and the apparatus disclosed above may be implemented as software, firmware, hardware and appropriate combinations thereof. In the hardware implementation, the division of the functional modules/units mentioned in the above description may not correspond to the division of physical components. For example, one physical component may have several functions, or one function or step may be executed jointly by several physical components. Some or all components may be implemented as software executed by processors such as digital signal processors or microcontrollers, hardware, or integrated circuits such as application specific integrated circuits. Such software may be distributed on a machine-readable medium (such as a computer-readable medium). The computer-readable medium may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer storage medium includes, but is not limited to, a RAM, a ROM, an EEPROM, a flash memory or other memory technologies, a CD-ROM, a digital versatile disc (DVD) or other optical disc storage, a magnetic cassette, a magnetic tape, a magnetic disk storage or other magnetic storage apparatuses, or any other medium used for storing desired information and accessed by a computer. In addition, as is known to those skilled in the art, the communication medium generally includes computer-readable instructions, data structures, program modules or other data in modulated data signals such as carriers or other transmission mechanisms, and may include any information delivery medium.

The above are only exemplary embodiments of the present invention and are not intended to limit the present invention, and for those skilled in the art, the present invention may have various modifications and variations. Any modifications, equivalent substitutions, improvements and the like made within the spirit and principle of the present invention should fall within the scope of the present invention.

## INDUSTRIAL APPLICABILITY

Embodiments of the present invention provide a dynamic bandwidth allocation method, device and system to solve a problem that the traffic QoS is reduced because G.fast does not support the dynamic bandwidth allocation, and the traffic QoS is improved.

## Claims

1. A dynamic bandwidth allocation method, comprising:

   acquiring traffic flow information of each Quality of Service, QoS, queue in a downstream buffer of a distribution point unit, DPU, and an upstream buffer of a customer premise equipment, CPE; and
   determining, according to the traffic flow information, a downstream/upstream rate ratio Mds/Mus; and
   transmitting, by the DPU, time division duplexing, TDD, frame configuration information corresponding to an adjusted downstream/upstream Mds/Mus to the CPE.

2. The method of claim 1, wherein the traffic flow information comprises at least one of:
   priority information of each QoS queue in the downstream buffer of the DPU and the upstream buffer of the CPE, a buffer data size, rate information of data entering each QoS queue in the downstream buffer of the DPU and the upstream buffer of the CPE, total rate information of data entering the downstream buffer of the DPU and total rate information of data entering the upstream buffer of the CPE; wherein the traffic flow information of each QoS queue in the upstream buffer of the CPE is reported by the CPE.

3. The method of claim 2, wherein the acquiring the traffic flow information of each QoS queue in the downstream buffer of the DPU and the upstream buffer of the CPE comprises:
   acquiring the priority information of each QoS queue in the downstream buffer of the DPU and the upstream buffer of the CPE, the buffer data size, the rate information of data entering each QoS queue in the downstream buffer of the DPU and the upstream buffer of the CPE, the total rate information of data entering the downstream buffer of the DPU and the total rate information of data entering the upstream buffer of the CPE; wherein the priority information comprises at least one of: a priority type corresponding to each QoS queue, and bandwidth size and weight information allocated according thereto.

4. The method of claim 3, wherein the priority type comprises at least one of: a fixed bandwidth, an assured bandwidth, a not-assured bandwidth and a best-effort bandwidth.

5. The method of claim 2, wherein the acquiring the traffic flow information of each QoS queue in the downstream buffer of the DPU and the upstream buffer of the CPE comprises:
acquiring route attainable net rate information of each QoS queue in the downstream buffer of the DPU and the upstream buffer of the CPE, the buffer data size of each QoS queue in the upstream buffer, the total rate information of data entering the upstream buffer and the total rate information of data entering the downstream buffer, and the rate information of data entering each QoS queue of the upstream buffer.

6. The method of claim 5, wherein the acquiring the route attainable net rate information comprises:
obtaining the route attainable net rate information by acquiring TDD frame configuration information and according to a current route situation, wherein the TDD frame configuration information comprises: a number of downstream symbols Mds and a number of upstream symbols Mus; the route attainable net rate information comprises a maximum downstream attainable net rate ATTNDRdsmax and a maximum upstream attainable net rate ATTNDRusmax.

7. The method of any one of claims 3 to 6, wherein the determining the downstream/upstream rate ratio Mds/Mus according to the traffic flow information comprises:

determining whether the traffic flow information matches at least one rule in a preset triggering rule list;
in determining that the traffic flow information matches at least one rule in the preset triggering rule list, triggering to adjust the downstream/upstream rate ratio Mds/Mus of a communication link.

8. The method of claim 7, wherein the determining whether the traffic flow information matches at least one rule in the preset triggering rule list comprises:
determining whether the total rate information of data entering the upstream buffer and the total rate information of data entering the downstream buffer match at least one rule in the preset triggering rule list.

9. The method of claim 7, wherein the determining whether the traffic flow information matches at least one rule in the preset triggering rule list comprises:
determining whether at least one of the rate information of data entering each QoS queue in the downstream buffer of the DPU and the upstream buffer of the CPE and the buffer data size matches at least one rule in the preset triggering rule list.

10. The method of claim 7, wherein the determining whether the traffic flow information matches at least one rule in the preset triggering rule list comprises:
determining whether at least one of the priority information, the rate information data entering each QoS queue in the downstream buffer of the DPU and upstream buffer of the CPE, the buffer data size, and the route attainable net rate information matches at least one rule in the preset triggering rule list.

11. The method of claim 10, wherein the determining whether the priority information matches at least one rule in the preset triggering rule list comprises at least one of:

determining whether a downstream fixed bandwidth FBds and an upstream fixed bandwidth FBus of the fixed bandwidth match at least one rule in the preset triggering rule list;
determining whether a downstream assured bandwidth ABds and an upstream assured bandwidth ABus of the assured bandwidth match at least one rule in the preset triggering rule list;
determining whether at least one of a downstream not-assured bandwidth NABds of the not-assured bandwidth, a downstream not-assured bandwidth weight Wnads corresponding to the NABds, an upstream not-assured bandwidth NABus and an upstream not-assured bandwidth weight Wnaus corresponding to the NABus matches at least one rule in the preset triggering rule list; and
determining whether at least one of a downstream best-effort bandwidth BBds of the best-effort bandwidth, a downstream best-effort bandwidth weight Wbeds corresponding to the BBds, an upstream best-effort bandwidth BBus and an upstream best-effort bandwidth weight Wbeus corresponding to the BBus matches at least one rule in the preset triggering rule list.

12. The method of any one of claims 8 to 11, wherein the triggering to adjust the downstream/upstream rate ratio Mds/Mus of the communication link comprises:

calculating a required maximum downstream payload rate ATTNDRdsmaxnew and a required maximum upstream payload rate ATTNDRusmaxnew corresponding to each priority information of each QoS queue in the downstream buffer of the DPU and the upstream buffer of the CPE separately;
calculating, according to a preset downstream fixed bandwidth MCRds and a preset upstream fixed bandwidth MCRus, with the required maximum downstream payload rate ATTNDRdsmaxnew and the required maximum upstream payload rate ATTNDRusmaxnew, and obtaining the adjusted downstream/upstream Mds/Mus.

13. The method of claim 12, in determining that the priority information is the fixed bandwidth, the method further comprises:

determining whether a sum of the upstream fixed bandwidth FBus and the downstream fixed bandwidth FBds is greater than an allocable upstream and downstream payload total bandwidth ATTNDRmaxestimate;
in determining that the sum is not greater than the ATTNDRmaxestimate, calculating separately the currently allocated maximum upstream payload rate ATTNDRusmaxnew corresponding to the upstream fixed bandwidth FBus and the currently allocated maximum downstream payload rate ATTNDRdsmaxnew corresponding to the downstream fixed bandwidth FBds; and determining whether a result ATTNDRremain of subtracting the currently allocated maximum upstream payload rate ATTNDRusmaxnew corresponding to the FBus and the currently allocated maximum downstream payload rate ATTNDRdsmaxnew corresponding to the FBds from the ATTNDRmaxestimate is greater than a negligible bandwidth size deltaBBmin that does not require being allocated;
in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream Mds/Mus.

14. The method of claim 12, in determining that the priority information is the assured bandwidth, the method further comprises:

calculating separately the currently allocated maximum upstream payload rate ATTNDRusmaxnew corresponding to the upstream assured bandwidth ABus and the currently allocated maximum downstream payload rate ATTNDRdsmaxnew corresponding to the downstream assured bandwidth ABds;
determining whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth size deltaBBmin that does not require being allocated; and
in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream Mds/Mus.

15. The method of claim 12, in determining that the priority information is the not-assured bandwidth, the method further comprises:

according to the upstream not-assured bandwidth weight Wnaus and the downstream not-assured bandwidth weight Wnads, calculating separately the currently allocated maximum upstream payload rate ATTNDRusmaxnew corresponding to the upstream not-assured bandwidth NABus and the currently allocated maximum downstream payload rate ATTNDRdsmaxnew corresponding to the downstream not-assured bandwidth NABds;
determining whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth deltaBBmin that does not require being allocated; and
in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

16. The method of claim 12, in determining that the priority information is the best-effort bandwidth, the method further comprises:

calculating separately the currently allocated maximum upstream payload rate ATTNDRusmaxnew corresponding to the upstream best-effort bandwidth BBus and the currently allocated maximum downstream payload rate ATTNDRdsmaxnew corresponding to the downstream best-effort bandwidth BBds;
determining whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth deltaBBmin that does not require being allocated; and
in determining that the ATTNDRremain is less than the deltaBBmin, calculating, according to the preset downstream fixed bandwidth MCRds and the preset upstream fixed bandwidth MCRus, with the ATTNDRdsmaxnew and the ATTNDRusmaxnew and obtaining the adjusted downstream/upstream rate ratio Mds/Mus.

17. The method of claim 7, before determining whether the traffic flow information matches at least one rule in the preset triggering rule list, the method further comprises:
configuring at least one rule in the preset triggering rule list according to the priority information and the route attainable net rate information.

18. The method of any one of claims 3 to 6, wherein transmitting, by the DPU, the TDD frame configuration information corresponding to the adjusted downstream/upstream rate ratio Mds/Mus to the CPE comprises:
negotiating the TDD frame configuration information corresponding to the adjusted downstream/upstream rate ratio Mds/Mus with the CPE and performing data transmission with the CPE according to the negotiated TDD frame configuration information after adjustment.

19. The method of claim 18, wherein the negotiating the TDD frame configuration information corresponding to the adjusted downstream/upstream rate ratio Mds/Mus with the CPE and performing the data transmission with the CPE according to the negotiated TDD frame configuration information after adjustment comprises:

transmitting the TDD frame configuration information corresponding to the adjusted downstream/upstream rate ratio Mds/Mus to the CPE;
receiving the negotiated TDD frame configuration information corresponding to the adjusted downstream/upstream rate ratio Mds/Mus returned by the CPE; and
configuring a TDD frame according to the negotiated TDD frame configuration information, and performing data transmission and reception with the CPE by using the TDD frame configuration information.

20. A dynamic bandwidth allocation device, comprising:

an acquisition module, configured to acquire traffic flow information of each Quality of Service, QoS, queue in a downstream buffer of a distribution point unit, DPU, and an upstream buffer of a customer premise equipment, CPE;
an adjustment module, configured to determine a downstream/upstream rate ratio Mds/Mus according to the traffic flow information; and
a transmitting module, configured to transmit time division duplexing, TDD, frame configuration information corresponding to an adjusted downstream/upstream rate ratio Mds/Mus to the CPE.

21. The device of claim 20, wherein the traffic flow information comprises at least one of:
priority information of each QoS queue in the downstream buffer of the DPU and the upstream buffer of the CPE, a buffer data size, rate information of data entering each QoS queue in the downstream buffer of the DPU and the upstream buffer of the CPE, total rate information of data entering the downstream buffer of the DPU, and total rate information of data entering the upstream buffer of the CPE; wherein the traffic flow information of each QoS queue in the upstream buffer of the CPE is reported by the CPE.

22. The device of claim 21, wherein the acquisition module comprises:
a first acquisition unit, configured to acquire, the priority information of each QoS queue in the downstream buffer of the DPU and the upstream buffer of the CPE, the buffer data size, the rate information of data entering each QoS queue in the downstream buffer of the DPU and the upstream buffer of the CPE, the total rate information of data entering the downstream buffer of the DPU, and the total rate information of data entering the upstream buffer of the CPE; wherein the priority information comprises at least one of: a priority type corresponding to each QoS queue, and bandwidth size and weight information allocated according thereto.

23. The device of claim 22, wherein the priority type comprises at least one of: a fixed bandwidth, an assured bandwidth, a not-assured bandwidth and a best-effort bandwidth.

24. The device of claim 21, wherein the acquisition module comprises:
a second acquisition unit, configured to acquire route attainable net rate information of each QoS queue in the downstream buffer of the DPU and the upstream buffer of the CPE, the buffer data size of each QoS queue in the upstream buffer, the total rate information of data entering the upstream buffer, and the total rate information of data entering the downstream buffer, and the rate information of data entering each QoS queue in the upstream buffer.

**25.** The device of claim 24, wherein the second acquisition unit comprises:
a first acquisition subunit, configured to obtain the route attainable net rate information by acquiring TDD frame configuration information and according to a current route situation, wherein the TDD frame configuration information comprises: a number of downstream symbols Mds and a number of upstream symbols Mus; the route attainable net rate information comprises a maximum downstream attainable net rate ATTNDRdsmax and a maximum upstream attainable net rate ATTNDRusmax.

**26.** The device of any one of claims 22 to 25, wherein the adjustment module comprises:

a determination unit, configured to determine whether the traffic flow information matches at least one rule in a preset triggering rule list; and
an adjustment unit, configured to trigger to adjust the downstream/upstream rate ratio Mds/Mus of a communication link in determining that the traffic flow information matches at least one rule in the preset triggering rule list.

**27.** The device of claim 26, wherein the determination unit comprises:
a first determination subunit, configured to determine whether the total rate information of data entering the upstream buffer and the total rate information of data entering the downstream buffer match at least one rule in the preset triggering rule list.

**28.** The device of claim 26, wherein the determination unit comprises:
a second determination subunit, configured to determine whether at least one of the rate information of data entering each QoS queue in the downstream buffer of the DPU and the upstream buffer of the CPE and the buffer data size matches at least one rule in the preset triggering rule list.

**29.** The device of claim 26, wherein the determination unit comprises:
a third determination subunit, configured to determine whether at least one of the priority information, the rate information of data entering each QoS queue in the downstream buffer of the DPU and the upstream buffer of the CPE, the buffer data size and the route attainable net rate information matches at least one rule in the preset triggering rule list.

**30.** The device of claim 29, wherein the third determination subunit is further configured to determine whether the priority information matches at least one rule in the preset triggering rule list in at least one of the following manners:

determining whether a downstream fixed bandwidth FBds and an upstream fixed bandwidth FBus of the fixed bandwidth match at least one rule in the preset triggering rule list;
determining whether a downstream assured bandwidth ABds and an upstream assured bandwidth ABus of the assured bandwidth match at least one rule in the preset triggering rule list;
determining whether at least one of the a downstream not-assured bandwidth NABds of the not-assured bandwidth, a downstream not-assured bandwidth weight Wnads corresponding to the NABds, an upstream not-assured bandwidth NABus and an upstream not-assured bandwidth weight Wnaus corresponding to the NABus matches at least one rule in the preset triggering rule list; and
determining whether at least one of a downstream best-effort bandwidth BBds of the best-effort bandwidth, a downstream best-effort bandwidth weight Wbeds corresponding to the BBds, an upstream best-effort bandwidth BBus and an upstream best-effort bandwidth weight Wbeus corresponding to the BBus matches at least one rule in the preset triggering rule list.

**31.** The device of any one of claims 27 to 30, wherein the adjustment module comprises:

a first calculation subunit, configured to calculate a required maximum downstream payload rate ATTNDRdsmaxnew and a required maximum upstream payload rate ATTNDRusmaxnew corresponding to each priority information of each QoS queue in the downstream buffer of the DPU and the upstream buffer of the CPE separately; and
a second calculation subunit, configured to calculate, according to a preset downstream fixed bandwidth MCRds and a preset upstream fixed bandwidth MCRus, with the required maximum downstream payload rate ATTNDRdsmaxnew and the required maximum upstream payload rate ATTNDRusmaxnew, and obtain the adjusted downstream/upstream rate ratio Mds/Mus.

**32.** The device of claim 31, wherein the adjustment unit comprises:

the first determination subunit, configured to determine, in determining that the priority information is the fixed bandwidth, whether a sum of the upstream fixed bandwidth FBus and the downstream fixed bandwidth FBds is greater than an allocable upstream and downstream payload total bandwidth ATTNDRmaxestimate;

the second determination subunit, configured to calculate, in determining that the sum is not greater than the ATTNDRmaxestimate, the currently allocated maximum upstream payload rate ATTNDRusmaxnew corresponding to the upstream fixed bandwidth FBus and the currently allocated maximum downstream payload rate ATTNDRdsmaxnew corresponding to the downstream fixed bandwidth FBds; and determine whether a result ATTNDRremain of subtracting the currently allocated maximum upstream payload rate ATTNDRusmaxnew corresponding to the FBus and the currently allocated maximum downstream payload rate ATTNDRdsmaxnew corresponding to the FBds from the ATTNDRmaxestimate is greater than a negligible bandwidth size deltaBBmin that does not require being allocated; and

a third calculation subunit, configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

**33.** The device of claim 31, wherein the adjustment unit comprises:

a fourth calculation subunit, configured to calculate, in determining that the priority information is the assured bandwidth, the currently allocated maximum upstream payload rate ATTNDRusmaxnew corresponding to the upstream assured bandwidth ABus and the currently allocated maximum downstream payload rate ATTNDRdsmaxnew corresponding to the downstream assured bandwidth ABds;

the third determination subunit, configured to determine whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth size deltaBBmin that does not require being allocated; and

a fifth calculation subunit, configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

**34.** The device of claim 31, wherein the adjustment unit comprises:

a sixth calculation subunit, configured to calculate, in determining that the priority information is the not-assured bandwidth, according to the upstream not-assured bandwidth weight Wnaus and the downstream not-assured bandwidth weight Wnads, the currently allocated maximum upstream payload rate ATTNDRusmaxnew corresponding to the upstream not-assured bandwidth NABus and the currently allocated maximum downstream payload rate ATTNDRdsmaxnew corresponding to the downstream not-assured bandwidth NABds;

a fourth determination subunit, configured to determine whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth size deltaBBmin that does not require being allocated; and

a seventh calculation subunit, which is configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

**35.** The device of claim 31, wherein the adjustment module further comprises:

an eighth calculation subunit, configured to calculate, in determining that the priority information is the best-effort bandwidth, the currently allocated maximum upstream payload rate ATTNDRusmaxnew corresponding to the upstream best-effort bandwidth BBus and the currently allocated maximum downstream payload rate ATTNDRdsmaxnew corresponding to the downstream best-effort bandwidth BBds;

a fifth determination subunit, configured to determine whether a result ATTNDRremain of subtracting the ATTNDRusmaxnew and the ATTNDRdsmaxnew from an allocable upstream and downstream payload total bandwidth ATTNDRmaxestimate is greater than a negligible bandwidth size deltaBBmin that does not require being allocated; and

a ninth calculation subunit, configured to calculate, in determining that the ATTNDRremain is less than the deltaBBmin, according to the preset downstream fixed bandwidth MCRds and the preset upstream fixed bandwidth MCRus, with the ATTNDRdsmaxnew and the ATTNDRusmaxnew and obtain the adjusted downstream/upstream rate ratio Mds/Mus.

36. The device of claim 27, further comprising: a rule configuration module, configured to configure, before determining whether the traffic flow information matches at least one rule in the preset triggering rule list, at least one rule in the preset triggering rule list according to the priority information and the route attainable net rate information.

37. The method of any one of claims 22 to 25, wherein the transmitting module is configured to negotiate the TDD frame configuration information corresponding to the adjusted downstream/upstream rate ratio Mds/Mus with the CPE and perform data transmission with the CPE according to the negotiated TDD frame configuration information after adjustment.

38. The device of claim 37, wherein the transmitting module comprises:

a transmitting unit, configured to transmit the TDD frame configuration information corresponding to the adjusted downstream/upstream rate ratio Mds/Mus to the CPE;
a receiving unit, configured to receive the negotiated TDD frame configuration information corresponding to the adjusted downstream/upstream rate ratio Mds/Mus returned by the CPE; and
a configuration unit, configured to configure a TDD frame according to the negotiated TDD frame configuration information, and perform data transmission and reception with the CPE by using the TDD frame configuration information.

39. A dynamic bandwidth allocation system, comprising a DPU and a CPE, wherein the DPU is communicatively connected to the CPE, wherein the DPU comprises the dynamic bandwidth allocation device of any one of claims 20 to 38.

FIG. 1

FIG. 2

Distribution Point Unit 30

```
┌──────────────────────────────────────────────────────┐
│  ┌────────────────────┐      ┌────────────────────────┐ │
│  │   Processor 302     │◄────►│ Transmission device 306 │ │
│  └────────────────────┘      └────────────────────────┘ │
│           ▲                                              │
│           │                                              │
│           ▼                                              │
│  ┌────────────────────┐                                  │
│  │    Memory 304       │                                 │
│  └────────────────────┘                                  │
└──────────────────────────────────────────────────────┘
```

FIG. 3

```
┌──────────────────────────────────────────────────────┐
│  Acquire traffic flow information of each QoS queue in a │  S402
│  downstream buffer of a DPU and an upstream buffer of a CPE │
└──────────────────────────────────────────────────────┘
                            │
                            ▼
┌──────────────────────────────────────────────────────┐
│ Determine a downstream/upstream rate ratio Mds/Mus according │  S404
│           to the traffic flow information              │
└──────────────────────────────────────────────────────┘
                            │
                            ▼
┌──────────────────────────────────────────────────────┐
│  Transmit, by the DPU, TDD frame configuration information │  S406
│  corresponding to the adjusted downstream/upstream rate ratio │
│                   Mds/Mus to the CPE                   │
└──────────────────────────────────────────────────────┘
```

FIG. 4

FIG. 5

FIG. 6

FIG. 7

FIG. 8

OutRate
(us-A-1)

Queue(us)-A-1(Priority1)

Inrate (us-A-1)

OutRate
(us-B-1)

Queue(us)-B-1(Priority2)

Inrate (us-B-1)

Traffic flow(us) to FTU-R

OutRate
(us-C-1)

Queue(us)-C-1(Priority3)

Inrate (us-C-1)

Traffic flow(us)

OutRate
(us-D-1)

Queue(us)-D-1(Priority4)

Inrate (us-D-1)

FIG. 9

Priority, allocated
bandwidth information
and route attainable net
rate information of each
QoS queue

Buffer size and data inRate
information of each QoS
queue in upstream buffer
and downstream buffer

Mds/Mus adjustment triggering analyzer

Triggering rule list

one or more
triggering rules
are matched

Mds/Mus generator

New Mds/Mus

FIG. 10

Acquisition module 1102

Adjustment module 1104

Transmitting module 1106

FIG. 11

# INTERNATIONAL SEARCH REPORT

| International application No. |
|---|
| **PCT/CN2017/087423** |

**A. CLASSIFICATION OF SUBJECT MATTER**

H04L 12/911 (2013.01) i; H04L 12/927 (2013.01) i; H04L 12/917 (2013.01) i

According to International Patent Classification (IPC) or to both national classification and IPC

**B. FIELDS SEARCHED**

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNPAT; WPI; EPODOC; CNKI: LU, Liuming or YUAN, Liquan or ZHANG, Weiliang or JIN, Jun; bandwidth or flow or symbolic number, downlink-uplink or backward-forward, buffer area or buffer line, size or proportion, uplink 5d downlink, forward 5d backward, speed or rate or symbol or slot or frame, percentage or rate or ratio or proportion, auto or dynamic or adjust or regulate or modulate or change or alter, configure or configuration or adjust or allocate or distribute or allot or assign or admeasure, buffer or cache or memory or store or storage, priority

**C. DOCUMENTS CONSIDERED TO BE RELEVANT**

| Category* | Citation of document, with indication, where appropriate, of the relevant passages | Relevant to claim No. |
|---|---|---|
| Y | CN 102291775 A (ZTE CORP.), 21 December 2011 (21.12.2011), description, paragraphs [0002] and [0009]-[0013] | 1-39 |
| Y | CN 101420359 A (ZTE CORP.), 29 April 2009 (29.04.2009), description, page 1, the last paragraph, page 2, paragraphs 9-12 and page 5, paragraphs 6-7 | 1-39 |
| Y | CN 103634086 A (ZTE CORP.), 12 March 2014 (12.03.2014), description, paragraphs [0004] and [0049]-[0070] | 1-39 |
| A | CN 1787678 A (DATANG MOBILE COMMUNICATIONS EQUIPMENT CO., LTD.), 14 June 2006 (14.06.2006), the whole document | 1-39 |
| A | WO 2014166060 A1 (QUALCOMM INCORPORATED), 16 October 2014 (16.10.2014), the whole document | 1-39 |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 12 August 2017 (12.08.2017) | **30 August 2017 (30.08.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **NING, Bo** Telephone No.: (86-10) **62413288** |

Form PCT/ISA/210 (second sheet) (July 2009)

## INTERNATIONAL SEARCH REPORT
Information on patent family members

| International application No. |
| --- |
| **PCT/CN2017/087423** |

| Patent Documents referred in the Report | Publication Date | Patent Family | Publication Date |
| --- | --- | --- | --- |
| CN 102291775 A | 21 December 2011 | WO 2011157030 A1 | 22 December 2011 |
| CN 101420359 A | 29 April 2009 | None | |
| CN 103634086 A | 12 March 2014 | WO 2013178189 A2 | 05 December 2013 |
| CN 1787678 A | 14 June 2006 | None | |
| WO 2014166060 A1 | 16 October 2014 | None | |

Form PCT/ISA/210 (patent family annex) (July 2009)